# EUROPEAN PATENT SPECIFICATION

(11) **EP 1 465 788 B1**
(45) Date of publication and mention of the grant of the patent: **25.11.2009**
(21) Application number: 02805976.4
(22) Date of filing: 20.12.2002
(51) Int. Cl.: B60L 11/00, B60L 15/00, B60K 7/00, G05B 19/042

(54) **CONTROL SYSTEM AND METHOD FOR ELECTRIC VEHICLE**
STEUERSYSTEM UND -VERFAHREN FÜR ELEKTROFAHRZEUG
SYSTEME ET PROCEDE DE COMMANDE D'UN VEHICULE ELECTRIQUE

(30) Priority: 21.12.2001 US 342292 P; 28.02.2002 US 360479 P; 13.06.2002 US 388451 P
(43) Date of publication of application: 13.10.2004
(73) Proprietor: Oshkosh Corporation, Oshkosh, Wisconsin 54902 (US)
(72) Inventor: YAKES, Christopher, K., Oshkosh, WI 54904 (US); MORROW, Jon, J., Neenah, WI 54956 (US); PILLAR, Duane, R., Oshkosh, WI 54902 (US); SQUIRES, Bradley, C., New London, WI 54961 (US)
(74) Representative: Sonn & Partner Patentanwälte
(86) International application number: PCT/US2002/041368
(87) International publication number: WO 2003/055714

(56) References cited:
- EP-A- 0 622 264
- EP-A- 0 898 213
- EP-A- 1 018 451
- EP-A- 1 092 406
- EP-A- 1 229 636
- WO-A-01/54939
- WO-A-98/19875
- US-A- 4 760 275
- US-A- 5 508 689
- US-A- 5 767 584
- US-B1- 6 421 593
- KHAN I A: "Automotive electrical systems: architecture and components" DIGITAL AVIONICS SYSTEMS CONFERENCE, 1999. PROCEEDINGS. 18TH ST LOUIS, MO, USA 24-29 OCT. 1999, PISCATAWAY, NJ, USA,IEEE, US, 24 October 1999 (1999-10-24), pages 8C5-1-8C5-10, XP010501310 ISBN: 0-7803-5749-3
- NAMUDURI C S ET AL: "High power density electric drive for an hybrid electric vehicle" APPLIED POWER ELECTRONICS CONFERENCE AND EXPOSITION, 1998. APEC '98. CONFERENCE PROCEEDINGS 1998., THIRTEENTH ANNUAL ANAHEIM, CA, USA 15-19 FEB. 1998, NEW YORK, NY, USA,IEEE, US, 15 February 1998 (1998-02-15), pages 34-40, XP010263573 ISBN: 0-7803-4340-9
- BOSE B K ET AL: "High frequency AC vs. DC distribution system for next generation hybrid electric vehicle" INDUSTRIAL ELECTRONICS, CONTROL, AND INSTRUMENTATION, 1996., PROCEEDINGS OF THE 1996 IEEE IECON 22ND INTERNATIONAL CONFERENCE ON TAIPEI, TAIWAN 5-10 AUG. 1996, NEW YORK, NY, USA,IEEE, US, 5 August 1996 (1996-08-05), pages 706-712, XP010203461 ISBN: 0-7803-2775-6
- RAJASHEKARA K: "History of electric vehicles in General Motors" INDUSTRY APPLICATIONS SOCIETY ANNUAL MEETING, 1993., CONFERENCE RECORD OF THE 1993 IEEE TORONTO, ONT., CANADA 2-8 OCT. 1993, NEW YORK, NY, USA,IEEE, US, 2 October 1993 (1993-10-02), pages 447-454, XP010118760 ISBN: 0-7803-1462-X

## Description

The invention relates to an electric traction vehicle according to the introductory part of claim 1. From WO 01/54939 A2, such an electric traction vehicle is known.

An electronic traction vehicle is a vehicle that uses electricity in some form or another to provide all or part of the propulsion power of the vehicle. This electricity can come from a variety of sources, such as stored energy devices relying on chemical conversions (batteries), stored electrical charge devices (capacitors), stored energy devices relying on mechanical stored energy (e.g. flywheels, pressure accumulators), and energy conversion products. In a typical conventional electric traction vehicle, a prime mover, such as a diesel engine, is used to drive an electric generator or alternator which supplies electric current to one or more traction motors. The traction motors typically are coupled to wheel sets on the vehicle. A typical vehicle that utilizes this type of electric traction is a railroad locomotive. In some conventional electric traction vehicles, stored energy is used to provide the main power which provides the electrical current to one or a plurality of traction motors. A typical vehicle that utilizes this type of electric traction is a golf cart or battery powered electric car. In some conventional electric traction vehicles, having more than one sources of energy is desirable. By having more than one source of energy, some optimizations in the design can allow for more efficient power production, thus allowing power to be used from different sources to come up with a more efficient system for traction. These types of vehicles are commonly referred to as hybrid electric vehicles (HEV). Series and Parallel HEV system designs are what is usually encountered.

A master controller is often used to control the overall system and give command signals to the engine, generator/alternator, prime mover energy conversion (AC to DC) stored energy conversion, and/or traction level energy conversion (DC to AC). This controller architecture requires a highly integrated control strategy. It also provides a single point of failure for the traction system. At the traction vehicle of WO 01 /54939 A2 mentioned above, wheels are provided with electric motor driving means in the respective wheels, with a central CPU, a respective operating system for each wheel, and several control systems associated with the e.g. three windings of the respective electric motors, as well as with a data communication system.

From EP 1 092 406 A2, a vehicle, in particular a motor-driven wheel chair, is known; there are two wheel drive units each having a motor and an associated control device including a computer, as well as a signal transmission device including a further computer which is connected to the control device computer via an RS-232 interface; thus, a network is suggested where a master/slave operation mode is possible. US 5,767,584 A discloses the generation of electrical power from fuel cell powered cars parked in a parking lot where an electric output grid, for collecting electric power, and a fuel supply grid piping, for supplying fuel to the parked cars, are provided; thus, a parked car is connected to the electric output grid via an electric snap in cable, and to the fuel supply grid piping via a snap in gas hose. By plugging in the cable and the hose, the fuel delivery system and the electric output of the fuel cell are diverted; for use as a driven vehicle again, the normal pathways for fuel and electric power output are restored by unplugging the hose and the cable. The article "High Power Density Electric Drive for an Hybrid Electric Vehicle", by Chandra S. Namuduri et al., APEC '98, Anaheim, CA, USA 15-19 Feb. 1998, New York, NY, USA, Conference Proceedings of the Thirteenth Annual Applied Power Electronics Conference and Exposition, IEEE, US, 15 February 1998, pages 34-40, XP010263573 ISBN: 0-7803-4340-9, discloses a drive system with wheels having built-in electric motors which are PWM controlled, and where a braking resistor is provided to avoid uncontrolled braking. In WO 98/19875 A, a modular wheel assembly having a drive motro, a steering motor, batteries and computing means fitted in the wheel is described. In case of a vehicle equipped with such wheel assemblies, the latter may be controlled by a central master computer.

Nevertheless, there is still a need for an electric traction vehicle that is modular in design and control. There is also a need for electric traction vehicle that can be updated and upgraded as new technology and components become available without a required redesign of the overall vehicle system. There is also a need for improved control systems for electric vehicles, and systems for servicing, repairing and monitoring electric vehicles.

To comply with the above needs, the invention provides an electric traction vehicle with the features as defined in independent claim 1. Preferred embodiments and further developments are defined in the dependent claims.

Other objects, features, and advantages of the present invention will become apparent to those skilled in the art from the following detailed description and accompanying drawings. It should be understood, however, that the detailed description and specific examples, while indicating preferred embodiments of the present invention, are given by way of illustration and not limitation.

In the drawings,

Fig. 1 is a schematic view of a fire truck having a control system;

Fig. 2 is a block diagram of the control system of Fig. 1 showing selected aspects of the control system in greater detail;

Fig. 3 is a schematic view of a military vehicle having a control system;

Figs. 4-5 are block diagrams of the control system of Fig. 3 showing selected aspects of the control system in greater detail, and

Figs. 6A-6B are modified views of the block diagram of Fig. 5 showing the operation of the control system to reconfigure itself in a failure mode of operation;

Fig.7 is a diagram showing the memory contents of an exemplary interface module in greater detail;

Fig. 8 is an overview of a preferred variant vehicle system;

Fig. 9 is a block diagram of the control system of Fig. 3 showing selected aspects of the control system in greater detail;

Fig. 10 is an I/O status table of Fig. 9 shown in greater detail;

Fig. 11 is a flowchart describing the operation of the control system of Fig. 9 in greater detail;

Fig. 12 is a data flow diagram describing data flow through an exemplary interface module during the process of Fig. 11;

Fig. 13 is a schematic diagram of an exemplary embodiment of an electric traction vehicle according to the invention, providing an exemplary embodiment of an AC bus assembly coupled to various modules on the vehicle;

Fig. 14 is a schematic diagram showing the vehicle of Fig. 13 being used as a mobile electric power plant;

Fig. 15 is a schematic diagram showing selected aspects of a control system of Fig. 13 in greater detail;

Fig. 16 is a flowchart showing the operation of a control system of Fig. 13 in greater detail;

Fig. 17 is a schematic diagram showing auxiliary drive modules used in the vehicle of Fig. 13;

Fig. 18 is a flowchart showing another aspect of the operation of a control system of Fig. 13 in greater detail;

Fig. 19A is a top plan view illustration of an exemplary embodiment of a differential assembly coupled to an electric motor for driving at least two wheels and supported by a suspension assembly, and Fig. 19B is an end view partial sectional view of an exemplary embodiment of an electric traction vehicle support structure coupled to a suspension assembly which suspends at least one wheel relative to the vehicle support structure; and

Figs. 20A-20B is a block diagram showing various configurations for connecting interface modules to drive controllers in the electric traction vehicle of Fig. 13;

Fig. 21 is a schematic view of a mixing vehicle having a control system in accordance with Fig. 13;

Fig. 22 is a schematic view of a refuse handling vehicle having a diagnostic system in accordance with Fig. 13;

Fig. 23 is a schematic view of a snow removal vehicle having a diagnostic system in accordance with Fig. 13.

### A. Fire Truck Control System

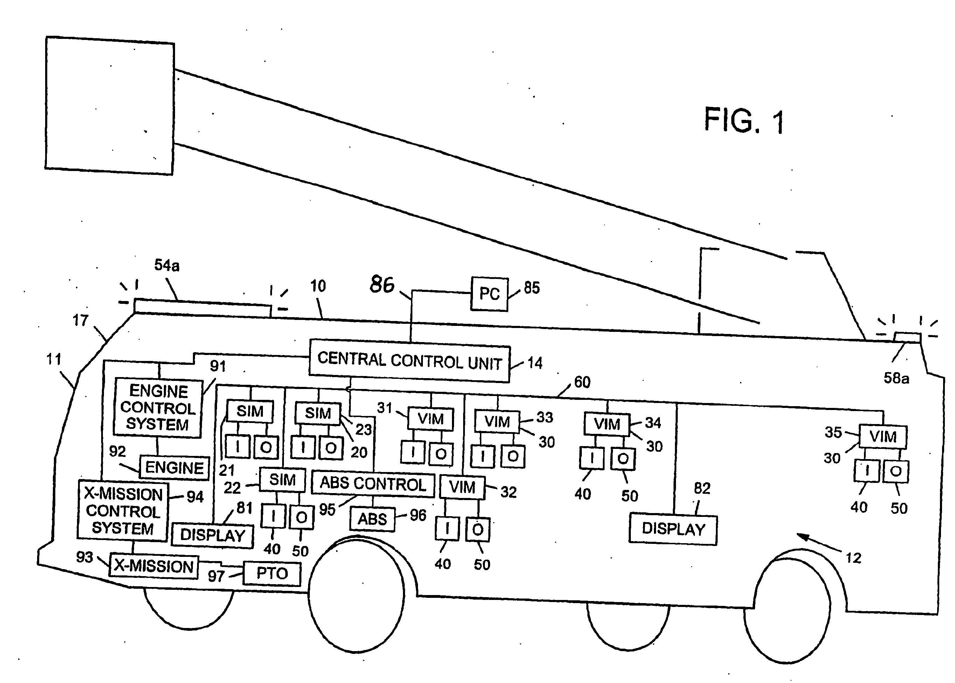

Referring now to Fig. 1, a fire truck 10 having a control system 12 is illustrated. By way of overview, the control system 12 comprises a central control unit 14, a plurality of microprocessor-based interface modules 20 and 30, a plurality of input devices 40 and a plurality of output devices 50. The central control unit 14 and the interface modules 20 and 30 are connected to each other by a communication network 60.

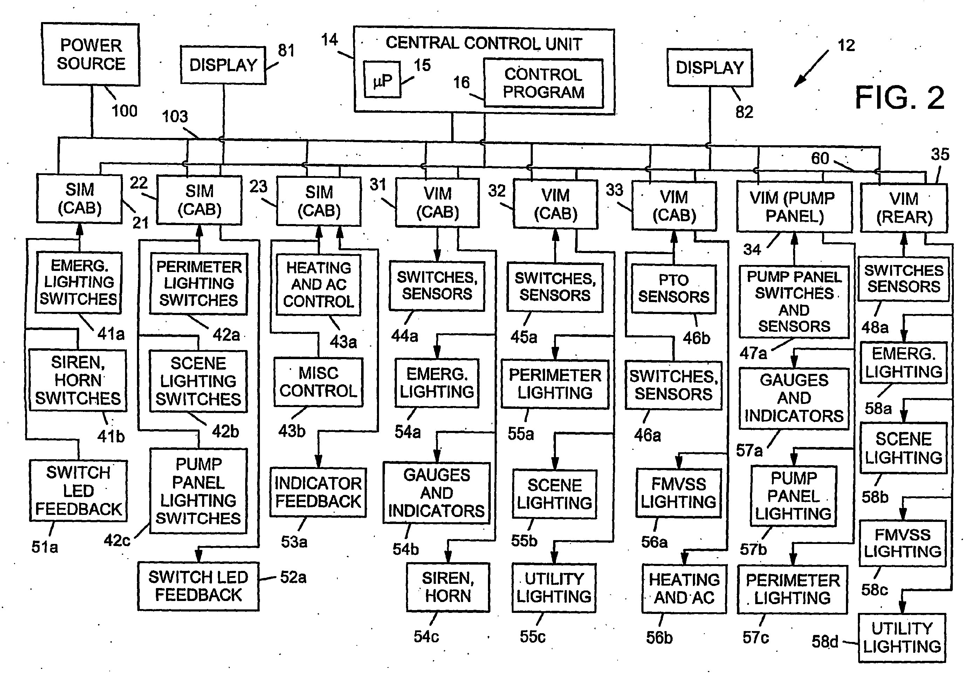

More specifically, the central control unit 14 is a microprocessor-based device and includes a microprocessor 15 that executes a control program 16 (see Fig. 2) stored in memory of the central control unit 14. In general, the control unit 14 executes the program to collect and store input status information from the input devices 40, and to control the output devices 50 based on the collected status information. The control program may implement an interlock system, a load manager, and a load sequencer. As described below, the central control unit 14 is preferably not connected to the I/O devices 40 and 50 directly but rather only indirectly by way of the interface modules 20 and 30, thereby enabling distributed data collection and power distribution. The I/O devices 40 and 50 are located on a chassis 11 of the fire truck 10, which includes both the body and the underbody of the fire truck 10.

In the illustrated embodiment, two different types of interface modules are used. The interface modules 20 interface mainly with switches and low power indicators, such as LEDs that are integrally fabricated with a particular switch and that are used to provide visual feedback to an operator regarding the state of the particular switch. For this reason, the interface modules 20 are sometimes referred to herein as "SIMs" ("switch interface modules"). Herein, the reference numeral"20"is used to refer to the interface modules 20 collectively, whereas the reference numerals 21,22 and 23 are used to refer to specific ones of the interface modules 20.

The interface modules 30 interface with the remaining I/O devices 40 and 50 on the vehicle that do not interface to the interface modules 20, and therefore are sometimes referred to herein as"VIMs" ("vehicle interface modules,"). The interface modules 30 are distinguishable from the interface modules 20 mainly in that the interface modules 30 are capable of handling both analog and digital inputs and outputs, and in that they are capable of providing more output power to drive devices such as gauges, valves, solenoids, vehicle lighting and so on. The analog outputs may be true analog outputs or they may be pulse width modulation outputs that are used to emulate analog outputs. Herein, the reference numeral"30"is used to refer to the interface modules 30 collectively, whereas the reference numerals 31,32, 33,34 and 35 are used to refer to specific ones of the interface modules 30.

Although two different types of interface modules are used in the illustrated embodiment, depending on the application, it may be desirable to use only a single type of interface module in order to reduce inventory requirements. Additional, while in Fig. 1 three of the interface modules 20 and five of the interface modules 30 are shown, this arrangement is again simply one example. It may be desirable to provide each interface module with more I/O points in order to reduce the number of interface modules that are required, or to use more interface modules with a smaller number of I/O points in order to make the control system 12 more highly distributed. Of course, the number of interface modules will also be affected by the total number of I/O points in the control system.

Fig. 1 shows an approximate distribution of the interface modules 20 and 30 throughout the fire truck 10. In general, in order to minimize wiring, the interface modules 20 and 30 are placed so as to be located as closely as possible to the input devices 40 from which input status information is received and the output devices 50 that are controlled. As shown in Fig. 1, there is a large concentration of interface modules 20 and 30 near the front of the fire truck 10, with an additional interface module 34 at mid-length of the fire truck 10 and another interface module 35 at the rear of the fire truck 10. The large concentration of interface modules 20 and 30 at the front of the fire truck 10 is caused by the large number of switches (including those with integral LED feedback output devices) located in a cab of the fire truck 10, as well as the large number of other output devices (gauges, lighting) which tend to be located in the cab or otherwise near the front of the fire truck 10. The interface module 34 that is located in the middle of the truck is used in connection with I/O devices 40 and 50 that are located at the fire truck pump panel (i.e. , the operator panel that has I/O devices for operator control of the fire truck's pump system). The interface module 35 that is located at the rear of the fire truck 10 is used in connection with lighting and other equipment at the rear of the fire truck 10.

The advantage of distributing the interface modules 20 and 30 in this manner can be more fully appreciated with reference to Fig. 2, which shows the interconnection of the interface modules 20 and 30. As shown in Fig. 2, the interface modules 20 and 30 receive power from a power source 100 by way of a power transmission link 103. The power transmission link 103 may comprise for example a single power line that is routed throughout the fire truck 10 to each of the interface modules 20 and 30. The interface modules then distribute the power to the output devices 50, which are more specifically designated with the reference numbers 51 a, 52a, 53a, 54a-c, 55a-c, 56a-b, 57a-c and 58a-d in Fig. 2.

It is therefore seen from Figs. 1 and 2 that the relative distribution of the interface modules 20 and 30 throughout the fire truck 10 in combination with the arrangement of the power transmission link 103 allows the amount of wiring on the fire truck 10 to be dramatically reduced. The power source 100 delivers power to the interface modules 20 and 30, which act among other things as power distribution centers, and not directly, to the output devices 50. Because the interface modules 20 and 30 are located so closely to the I/O devices 40 and 50, most of the I/O devices can be connected to the interface modules 20 and 30 using only a few feet of wire or less. This eliminates the need for a wire harness that extends the length of the fire truck (about forty feet) to establish connections for each I/O devices 40 and 50 individually.

Continuing to refer to Fig. 2, the switch interface modules 20 and the interconnection of the interface modules 20 with various I/O devices will now be described in greater detail. The interface modules 20 are microprocessor-based, as previously noted, and include a microprocessor that executes a program to enable communication over the communication networks 60, as detailed below.

The same or a different microprocessor of the interface modules 20 may also be used to process input signals received from the input devices 40. In particular, the interface modules 20 preferably perform debounce filtering of the switch inputs, so as to require that the position of the switch become mechanical stable before a switch transition is reported to the central control unit 14. For example, a delay of fifty milliseconds may be required before a switch transition is reported. Performing this filtering at the interface modules 20 reduces the amount of processing that is required by the central control unit 14 to interpret switch inputs, and also reduces the amount of communication that is required over the communication network 60 because each switch transition need not be reported.

Physically, the interface modules 20 may be placed near the headliner of a cab 17 of the fire truck 10. Traditionally, it is common practice to locate panels of switches along the headliner of the cab for easy access by an operator of the fire truck. Additionally, as detailed below, in the preferred embodiment, the interface modules 20 are connected to switches that have integrally fabricated LEDs for indicating the state of the output device controlled by the switch to provide maximum operator feedback. These LEDs are output devices which are connected to the interface modules 20. Therefore, by locating the interface modules near the headliner of the cab, the amount of wiring required to connect the interface modules 20 not only to the switches and but also to the LED indicators is reduced.

In the preferred embodiment, the interface modules 20 have between ten and twenty-five each of inputs and outputs and, more preferably, have sixteen digital (on/off switch) inputs and sixteen LED outputs. Most of these inputs and outputs are utilized in connection with switches having integrally fabricated LEDs. However, it should be noted that there need not be a one-to-one correspondence between the switches and the LEDs, and that the inputs and the outputs of the interface modules 20 need not be in matched pairs. For example, some inputs may be digital sensors (without a corresponding output device) and some of the outputs may be ordinary digital indicators (without a corresponding input device). Additionally, the LED indicators associated with the switch inputs for the interface module 21 could just as easily be driven by the interface module 23 as by the interface module 21. although this arrangement is not preferred. Of course, it is not necessary that all of the inputs and outputs on a given interface module 20 be utilized and, in fact, it is likely that some will remain unutilized.

One way of establishing a dedicated link between the I/O devices 40 and 50 and the interface modules 20 is through the use of a simple hardwired link. Considering for example an input device which is a switch, one terminal of the switch may be connected (e. g. by way of a harness connector) to an input terminal of the interface module 20 and the other terminal of the switch may be tied high (bus voltage) or low (ground). Likewise, for an output device which is an LED, one terminal of the LED may be connected to an output terminal of the interface module 20 and the other terminal of the LED may again be tied high or low. Other dedicated links, such as RF links, could also be used.

To provide maximum operator feedback, the LEDs that are located with the switches have three states, namely, off, on, and blinking. The off state indicates that the switch is off and therefore that the device controlled by the switch is off. Conversely, the on state indicates that the switch is on and that the device controlled by the switch is on. The blinking state indicates that the control system 12 recognizes that a switch is on, but that the device which the switch controls is nevertheless off for some other reason (e. g. , due to the failure of an interlock condition, or due to the operation of the load manager or load sequencer). Notably, the blinking LED feedback is made possible by the fact that the LEDs are controlled by the control unit 14 and not directly by the switches themselves, since the switches themselves do not necessarily know the output state of the devices they control.

Fig. 2 depicts one example of interconnection of input devices 40 (including input devices 41 a, 41 b, 42a, 42b, 43a, 43b, 44a, 45a, 46a, 46b, 47a, and 48a) and output devices 50 (including output devices 58d) 52a, 53a, 54a, 54b, 54c, 55a, 55b, 55c, 56a, 56b, 57a, 57b, 57c, 58a, 58b, 58c, 58d) to interface modules 20 and 30 (including interface modules 21,22, 23,31, 32,33, 34 and 35). Many or all of the I/O devices 40 and 50 could be the same as those that have previously been used on fire trucks. Additional, it should be noted that the example in Fig. 2 is just one example, and that a virtually unlimited number of configurations are possible.

Like the interface modules 20, the interface modules 30 are microprocessor-based and include a microprocessor that executes a program to enable communication over the communication network 60. The same or a different microprocessor of the interface modules 30 may also be used to process input signals received from the input devices 40 and to process output signals transmitted to the output devices 50. For the interface modules 30, this processing includes not only debounce filtering, in the case of switch inputs, but also a variety of other types of processing. For example, for analog inputs, this processing includes any processing that is required to interpret the inputs from analog-to-digital (A/D) converters, including converting units. For frequency inputs, this processing includes any processing that is required to interpret inputs from firequency-to-digital converters, including converting units. This processing also incudes other simple tittering operations. For example, in connection with one analog input, this processing may include notifying the central control unit 14 of the status of an input device only every second or so. In connection with another analog input, this processing may include advising the central control unit 14 only when the status of the input device changes by a predetermined amount. For analog output devices, this processing includes any processing that is required to interpret the outputs for digital- to-analog (D/A) converters, including converting units. For digital output devices that blink or flash, this processing includes implementing the blinking or flashing (i. e., turning the output device on and off at a predetermined frequency) based on an instruction from the central control unit 14 that the output device should blink or flash. In general, the processing by the interface modules 30 reduces the amount of information which must be communicated over the communication link, and also reduces the amount of time that the central control unit 14 must spend processing minor changes in analog input status.

Preferably, the configuration information required to implement the I/O processing that has just been described is downloaded from the central controls unit 14 to each interface module 30 (and each interface module 20) at power-up. Additionally, the harness connector that connects to each of the interface modules 20 and 30 are preferably electronically keyed, such that being connected to a particular harness connector provides the interface modules 20 and 30 with a unique identification code (for example, by tying various connector pins high and low to implement a binary code). The advantage of this approach is that the interface modules 20 and 30 become interchangeable devices that are customized only at power-up. As a result, if one of the interface modules 30 malfunctions, for example, a new interface module 30 can be plugged into the control system 12, customized automatically at power-up (without user involvement), and the control system 12 then becomes fully operational. This enhances the maintainability of the control system 12.

The interface modules 20 and the interface modules 30 are connected to the central control unit 14 by the communication network 60. The communication network may be implemented using a network protocol, for example, which is in compliance with the Society of Automotive Engineers (SAE) J 1708/1587 and/or J 1939 standards. The particular network protocol that is utilized is not critical, although all of the devices on the network should be able to communicate effectively and reliably.

The transmission medium may be implemented using copper or fiber optic cable. Fiber optic cable is particularly advantageous in connection with fire trucks because fiber optic cable is substantially immune to electromagnetic interference, for example, from communication antennae on mobile news vehicles, which are common at the scenes of fires. Additionally, fiber optic cable is advantageous because it reduces RF emissions and the possibility of short circuits as compared to copper-based networks. Finally, fiber optic cable is advantageous because it reduces the possibility of electrocution as compared to copper in the event that the cable accidentally comes into contact with power lines at the scene of a fire.

Also connected to the communication network 60 are a plurality of displays 81 and 82. The displays 81 and 82 permit any of the data collected by the central control unit 14 to be displayed to the firefighters in real time. In practice, the data displayed by the displays 81 and 82 may be displayed in the form of text messages and may be organized into screens of data (given that there is too much data to display at one, time) and the displays 81 and 82 may include membrane pushbuttons that allow the firefighters to scroll through, page through, or otherwise view the screens of data that are available. Additionally, although the displays 81 and 82 are both capable of displaying any of the information collected by the central control unit 14, in practice, the displays 81 and 82 are likely to be used only to display selected categories of information. For example, assuming the display 81 is located in the cab and the display 82 is located at the pump panel, the display 81 is likely to be used to display information that pertains to devices which are controller from within the cab, whereas the display 82 is likely to be used to display information pertaining to the operation of the pump panel. Advantageously, the displays 81 and 82 give firefighters instant access to fire truck information at a single location, which facilitates both normal operations of the fire truck as well as troubleshooting if problems arise.

Also shown in Fig. 1 is a personal computer 85 which is connected to the control unit 14 by way of a communication link 86, which may be a modem link, an RS-232 link, an Internet link, and so on. The personal computer 85 allows diagnostic software to be utilized for remote or local troubleshooting of the control system 12, for example, through direct examination of inputs, direct control of outputs, and viewing and controlling internal states, including interlock states. Because all I/O status information is stored in the central control unit 14, this information can be easily accessed and manipulated by the personal computer 85. If a problem is encountered, the personal computer can be used to determine whether the central control unit 14 considers all of the interface modules 20 and 30 to be"on-line"and, if not, the operator can check for bad connections and so on. If a particular output device is not working properly, the personal computer 85 can be used to trace the I/O status information from the switch or other input device through to the malfunctioning output device. For example, the personal computer 85 can be used to determine whether the switch state is being read properly, whether all interlock conditions are met, and so on.

The personal computer 85 also allows new firmware to be downloaded to the control unit 14 remotely (e. g. , from a different city or state or other remote location by way of the Internet or a telephone link) by way of the communication link 86. The firmware can be firmware for the control unit 14, or it can be firmware for the interface modules 20 and 30 that is downloaded to the control unit 14 and then transmitted to the interface modules 20 and 30 by way of the communication network 60.

Finally, referring back to Fig. 1, several additional systems are shown which will now be briefly described before proceeding to a discussion of the operation of the control system 12. In particular, Fig. 1 shows an engine system including an engine 92 and an engine control system 91, a transmission system including a transmission 93 and a transmission control system 94, and an anti-lock brake system including an anti-lock brake control system 95 and anti-lock brakes 96. The transmission 93 is mechanically coupled to the engine 92, and is itself further mechanically coupled to a PTO system 97. The PTO system 97 allows mechanical power from the engine to be diverted to water pumps, aerial drive mechanism, stabilizer drive mechanisms, and so on. In combination, the engine system, the transmission system and the PTO system form the power train of the fire truck 10.

The control systems 91, 94 and 95 may be connected to the central control unit 14 using the same or a different communication network than is used by the interface modules 30 and 40. In practice, the control systems 91, 94 and 95 are likely to be purchased as off-the-shelf systems, since most fire truck manufacturers purchase rather than manufacture engine systems, transmission systems and anti-lock brake systems. As a result, it is likely that the control systems 91, 94 and 95 will use a variety of different communication protocols and therefore that at least one additional communication network will be required.

By connecting the control systems 91, 94 and 95 to the central control unit 14, an array of additional input status information becomes available to the control system 12. For example, for the engine, this allows the central control unit 14 to obtain I/O status information pertaining to engine speed, engine hours, oil temperature, oil pressure, oil level, coolant level, fuel level, and so on. For the transmission, this allows the central control unit 14 to obtain, for example, information pertaining transmission temperature, transmission fluid level and/or transmission state (1st gear, 2nd gear, and so on). Assuming that an off-the-shelf engine or transmission system is used, the information that is available depends on the manufacturer of the system and the information that they have chosen to make available.

Connecting the control systems 91, 94 and 95 to the central control unit 14 is advantageous because it allows information from these subsystems to be displayed to firefighters using the displays 81 and 82. This also allows the central control unit 14 to implement various interlock conditions as a function of the state of the transmission, engine or brake systems. For example, in order to turn on the pump system (which is mechanically driven by the engine and the transmission), an interlock condition may be implemented that requires that the transmission be in neutral or 4th lockup (i. e., fourth gear with the torque converter locked up), so that the pump can only be engaged when the wheels are disengaged from the power train. The status information from these systems can therefore be treated in the same manner as I/O status information from any other discrete I/O device on the fire truck 10. It may also be desirable to provide the central control unit 14 with a limited degree of control over the engine and transmission systems, for example, enabling the central control unit 14 to issue throttle command requests to the engine control system 91. This allows the central control unit 14 to control the speed of the engine 92 and therefore the voltage developed across the alternator that forms part of the power source 100.

From the foregoing description, a number advantages of the preferred fire truck control system are apparent. In general, the control system is easier to use, more flexible, more robust, and more reliable than existing fire truck control systems. In addition, because of these advantages, the control system also increases firefighter safety because the many of the functions that were previously performed by firefighters are performed automatically, and the control system also makes possible features that would otherwise be impossible or at least impractical. Therefore, firefighters are freed to focus on fighting fires.

The control system is easier to use because the control system provides a high level of cooperation between various vehicle subsystems. The control system can keep track of the mode of operation of the fire truck, and can control output devices based on the mode of operation. The functions that are performed on the fire truck are more fully integrated to provide a seamless control system, resulting in better performance.

For example, features such as load management and load sequencing are implemented in the control program executed by the central control unit. No additional hardware is required to implement load management and load sequencing. Therefore, if it is desired to change the order of load sequencing, all that is required is to modify the control program. It is also possible to have different load sequencing defined for different modes of operation of the vehicle with little or no increase in hardware. The manner in which load management is performed can also be changed dynamically during the operation of the fire truck.

The control system is robust and can accept almost any new feature without changes in wiring. Switches are connected to a central control unit and not to outputs directly, and new features can be programmed into the control program executed by the central control unit. A system can be modified by adding a new switch to an existing interface module, or by modifying the function of an existing switch in the control program. Therefore, modifying a system that is already in use is easy because little or no wiring changes are required.

Additionally, because the control system has access to input status information from most or all of the input devices 40 on the fire truck and has control over most or all of the output devices 50 on the fire truck, a high level of cooperation between the various subsystems on the fire truck is possible. Features that require the cooperation of multiple subsystems are much easier to implement.

The fire truck is also easier to operate because there is improved operator feedback. Displays are provided which can be used to determine the I/O status of any piece of equipment on the vehicles, regardless of the location of the display. Additionally, the displays facilitate troubleshooting, because troubleshooting can be performed in real time at the scene of a fire when a problem is occurring. Troubleshooting is also facilitated by the fact that the displays 81, 82 are useable to display all of the I/O status information on the fire truck. There is no need for a firefighter to go to different locations on the fire truck to obtain required information. Troubleshooting is also facilitated by the provision of a central control unit 14 which can be connected by modem to another computer. This allows the manufacturer to troubleshoot the fire truck as soon as problems arise.

LED indicators associated with switches also improve operator feedback. The LEDs indicate whether the switch is considered to be off or on, or whether the switch is considered to be on but the output device controlled by the switch is nevertheless off due to some other condition on the fire truck.

Because the control system is easier to use, firefighter safety is enhanced. When a firefighter is fighting fires, the firefighter is able to more fully concentrate on fighting the fire and less on having to worry about the fire truck. To the extent that the control system accomplishes tasks that otherwise would have to be performed by the firefighter, this frees the firefighter to fight fires.

The control system is also more reliable and maintainable, in part because relay logic is replaced with logic implemented in a control program. The logic in the control program 16 is much easier to troubleshoot, and troubleshooting can even occur remotely by modem. Also mechanical circuit breakers can be replaced with electronic control, thereby further reducing the number of mechanical failure points and making current control occur more seamlessly. The simplicity of the control system minimizes the number of potential failure points and therefore enhances reliability and maintainability.

The system is also more reliable and more maintainable because there is less wire. Wiring is utilized only to established dedicated links between input/output devices and the interface module to which they are connected. The control system uses distributed power distribution and data collecting. The interface modules 20, 30 are interconnected by a network communication link instead of a hardwired link, thereby reducing the amount of wiring on the fire truck. Most wiring is localized wiring between the I/O devices and a particular interface module.

Additionally, the interface modules 20, 30 are interchangeable units. In the disclose embodiment, the interface modules 20 are interchangeable with each other, and the interface modules 30 are interchangeable with each other. If a greater degree of interchangeability is required, it is also possible to use only a single type of interface module. If the control system were also applied to other types of equipment service vehicles (e. g. , snow removal vehicles, refuse handling vehicles, cement/concrete mixers, military vehicles such as those of the multipurpose modular type, on/off road severe duty equipment service vehicles, and so on), the interface modules would even be made interchangeable across platforms since each interface module views the outside world in terms of generic inputs and outputs, at least until configured by the central control unit. Because the interface modules are interchangeable, maintainability is enhanced. An interface module that begins to malfunction due to component defects may be replaced more easily. On power up, the central control unit downloads configuration information to the new interface module, and the interface module becomes fully operational. This enhances the maintainability of the control system.

Because the interface modules 20, 30 are microprocessor-based, the amount of processing required by the central control unit 14 as well as the amount of communication that is necessary between the interface modules 20, 30 and the central control unit 14 is reduced. The interface modules 20, 30 perform preprocessing of input signals and filter out less critical input signals and, as a result, the central control unit 14 receives and responds to critical messages more quickly.

### B. Military Vehicle Control System

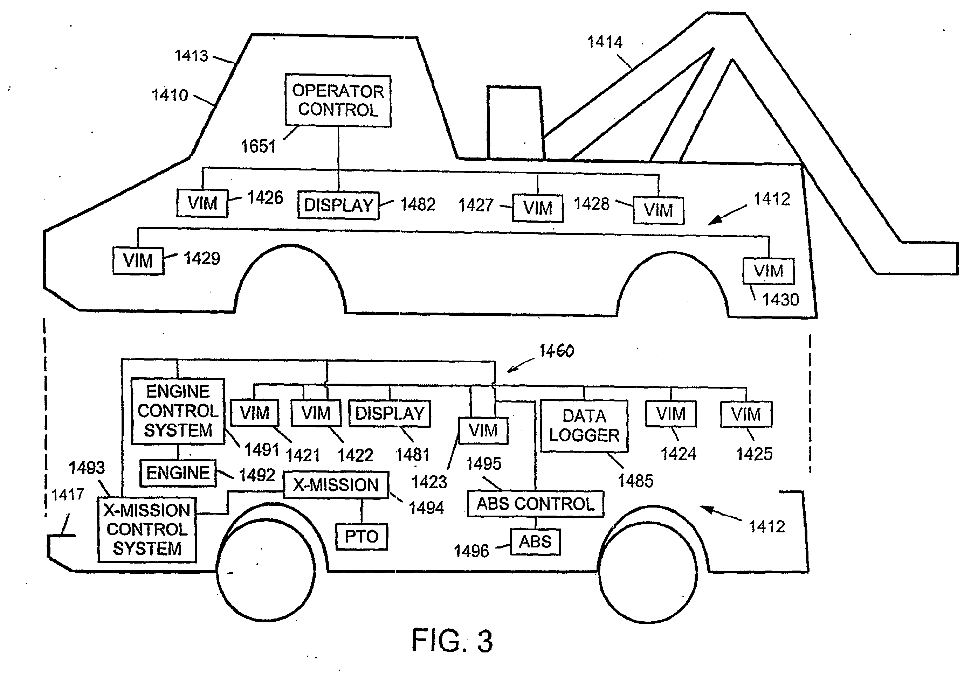

Referring now to Fig. 3, a military vehicles 1410 having a control system 1412 is illustrated. As previously indicated, the control system described above can be applied to other types of equipment service vehicles, such as military vehicles, because the interface modules view the outside world in terms of generic inputs and outputs. Most or all of the advantages described above in the context of fire fighting vehicles are also applicable to military vehicle. As previously described, however, it is sometimes desirable in the context of military applications for the military vehicle control system to be able to operate at a maximum level of effectiveness when the vehicle is damaged by enemy fire, nearby explosions, and so on. In this situation, the control system 1412 preferably incorporates a number of additional features, discussed below, that increase the effectiveness of the control system 1412 in these military applications.

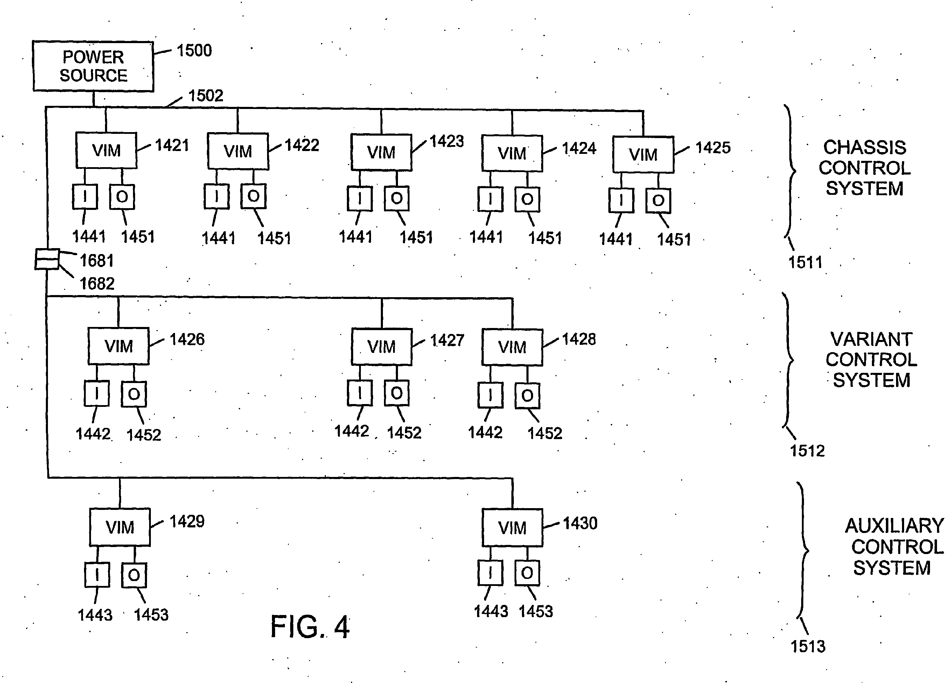

By way of overview, the control system 1412 comprises a plurality of microprocessor-based interface modules 1420, a plurality of input and output devices 1440 and 1450 (see Fig. 4) that are connected to the interface modules 1420, and a communication network 1460 that interconnects the interface modules 1420. The control system 1412 preferably operates in the same manner as the control system 12 of Figs. 1-2, except to the extent that differences are outlined are below. A primary difference between the control system 12 and the control system 1412 is that the control system 1412 does not include a central control unit that is implemented by a single device fixed at one location. Rather, the control system 1412 includes a central control unit that is allowed to move from location to location by designating one of the interface modules 1420 as a"master"interface module and by further allowing the particular interface module that is the designated master interface module to change in response to system conditions. As will be detailed bellow, this feature allows the control system 1412 to operate at a maximum level of effectiveness when the military vehicles 1410 is damaged. Additional features that assist failure management are also included.

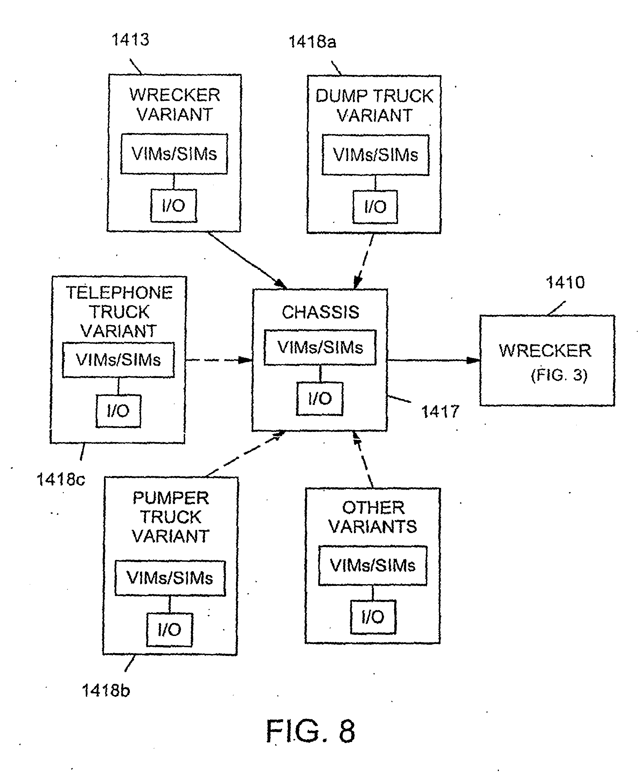

More specifically, in the illustrated embodiment, the control system 1412 is used in connection with a military vehicles 1410 which is a multipurpose nodular military vehicle. As is known, a multipurpose module vehicle comprises a chassis and a variant module that is capable of being mounted on the chassis, removed, and replaced with another variant modules, thereby allowing the same chassis to be used for different types of vehicles with different types of functionality depending on which variant module is mounted to the chassis. In the illustrated embodiment, the military vehicle 1410 is a wrecker and includes a wrecker variant modules 1413 mounted on a chassis (underbody) 1417 of the military vehicles 1410. The weight of the variant module 1413 is supported by the chassis 1417. The variant module 1413 includes a mechanical drive device 1414 capable of imparting motion to solid or liquid matter that is not part of the military vehicle 1410 to provide the military vehicle 1410 with a particular type of functionality. In Fig. 3, where the variant module 1413 is a wrecker variant, the mechanical drive device is capable of imparting motion to a towed vehicle. As shown in Fig. 8, the variant module 1413 is removable and replaceable with other types of variant modules, which may include a dump truck variant 1418a, a water pump variant 1418b, a telephone variant 1418c, and so on. Thus, for example, the wrecker variant 1413 may be removed and replaced with a water pump variant 1418b having a different type of drive mechanism (a water pump) to provide a different type of functionality (pumper functionality). The I/O devices 1440 and 1450 used by the vehicle 1410 include devices that are the same as or similar to the non-fire truck specific I/O devices of Figs. 1-2 (i. e. , those types of I/O devices that are generic to most types of vehicles), as well as I/O devices that are typically found on the specific type of variant module chosen (in Fig. 3, a wrecker variant).

The interface modules 1420 are constructed in generally the same manner as the interface modules 20 and 30 and each includes a plurality of analog and digital inputs and outputs. The number and type of inputs and outputs may be the same, for example, as the vehicle interface modules 30. Preferably, as described in greater detail below, only a single type of interface module is utilized in order to increase the field serviceability of the control system 1412. Herein, the reference numeral 1420 is used to refer to the interface modules 1420 collectively, whereas the reference numerals 1421-1430 are used to refer to specific ones of the interface modules 1420. The interface modules are described in greater detail in connection with Figs. 4-7.

Also connected to the communication network 1460 are a plurality of displays 1481 and 1482 and a data logger 1485. The displays 1481 and 1482 permit any of the data collected by the control system 1412 to be displayed in real time, and also display warning messages. The displays 1481 and 1482 also include membrane pushbuttons that allow the operators to scroll through, page through, or otherwise view the screens of data that are available. The membrane pushbuttons may also allow operators to change values of parameters in the control system 1412. The data logger 1485 is used to store information regarding the operation of the military vehicle 1410. The data logger 1485 may also be used as a"black box recorder"to store information logged during a predetermined amount of time (e. g. , thirty seconds) immediately prior to the occurrence of one or more trigger events (e. g., events indicating that the military vehicle 1410 has been damaged or rendered inoperative, such as when an operational parameter such as an accelerometer threshold has been exceeded).

Finally, Fig. 3 shows an engine system including an engine 1492 and an engine control system 1491, a transmission system including a transmission 1494 and a transmission control system 1493, and an anti-lock brake system 1496 including an anti- lock brake control system 1495. These systems may be interconnected with the control system 1412 in generally the same manner as discussed above in connection with the engine 92, the engine control system 91, the transmission 93, the transmission control system 94, the anti-lock brake system 96 and the anti-lock brake system control 95 of Fig. 1.

Referring now also to Fig. 4-7, the structure and interconnection of the interface modules 1420 is described in greater detail. Referring first to Fig. 4, the interconnection of the interface modules 1420 with a power source 1500 is described. The interface modules 1420 receive power from the power source 1500 by way of a power transmission link 1502. The interface modules 1420 are distributed throughout the military vehicle 1410, with some of the interface modules 1420 being located on the chassis 1417 and some of the interface modules 1420 being located on the variant module 1413.

The control system is subdivided into three control systems including a chassis control system 1511, a variant control system 1512, and an auxiliary control system 1513. The chassis control system 1511 includes the interface modules 1421-1425 and the I/O devices 1441 and 1451, which are all mounted on the chassis 1417. The variant control system 1512 includes the interface modules 1426-1428 and the I/O devices 1442 and 1452, which are all mounted on the variant module 1413. The auxiliary control system 1513 includes the interface modules 1429-1430 and the I/O devices 1443 and 1453, which may be mounted on either the chassis 1417 or the variant module 1413 or both.

The auxiliary control system 1513 may, for example, be used to control a subsystem that is disposed on the variant module but that is likely to be the same or similar for all variant modules (e. g., a lighting subsystem that includes headlights, tail lights, brake lights, and blinkers). The infusion of interface modules 1420 within a particular control system may also be performed based on location rather than functionality. For example, if the variant module 1413 has an aerial device, it may be desirable to have one control system for the chassis, one control system for the aerial device, and one control, system for the remainder of the variant module. Additionally, although each interface module 1420 is shown as being associated with only one of the control systems 1511-1513, it is possible to have interface modules that are associated with more than one control system. It should also be noted that the number of sub- control systems, as well as the number of interface modules, is likely to vary depending on the application. For example, a mobile command vesicle is likely to have more control subsystems than a wrecker variant, given the large number of I/O devices usually found on mobile command vehicles.

The power transmission link 1502 may comprise a single power line that is routed throughout the military vehicles 1410 to each of the interface modules 1420, but preferably comprises redundant power lines. Again, in order to minimize wiring, the interface modules 1420 are placed so as to be located as closely as possible to the input devices 1440 from which input status information is received and the output devices 1450 that are controlled. This arrangement allows the previously-described advantages associated with distributed data collection and power distribution to be achieved. Dedicated communication links, which may for example be electric or photonic links, connect the interface modules 1421-1430 modules with respective ones of the I/O devices, as previously described.

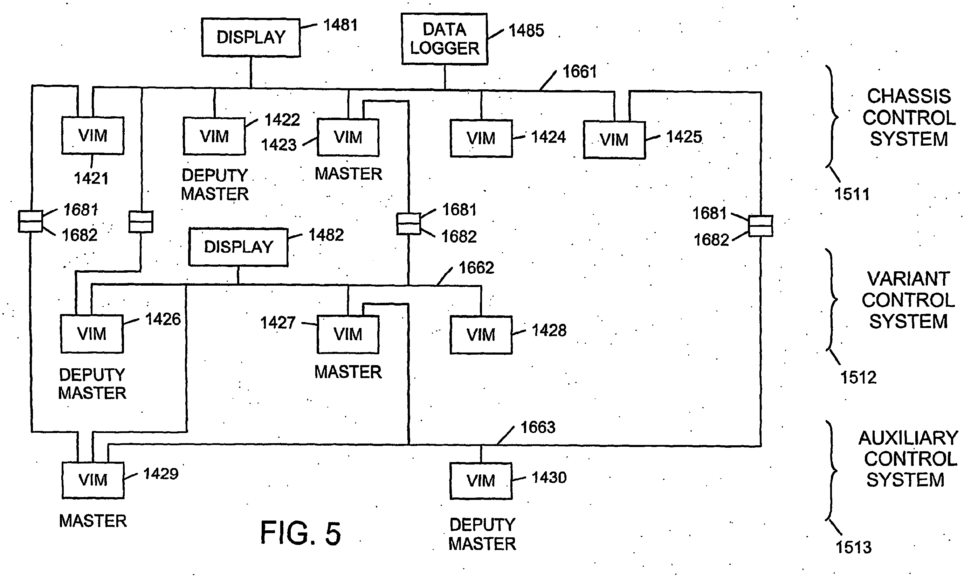

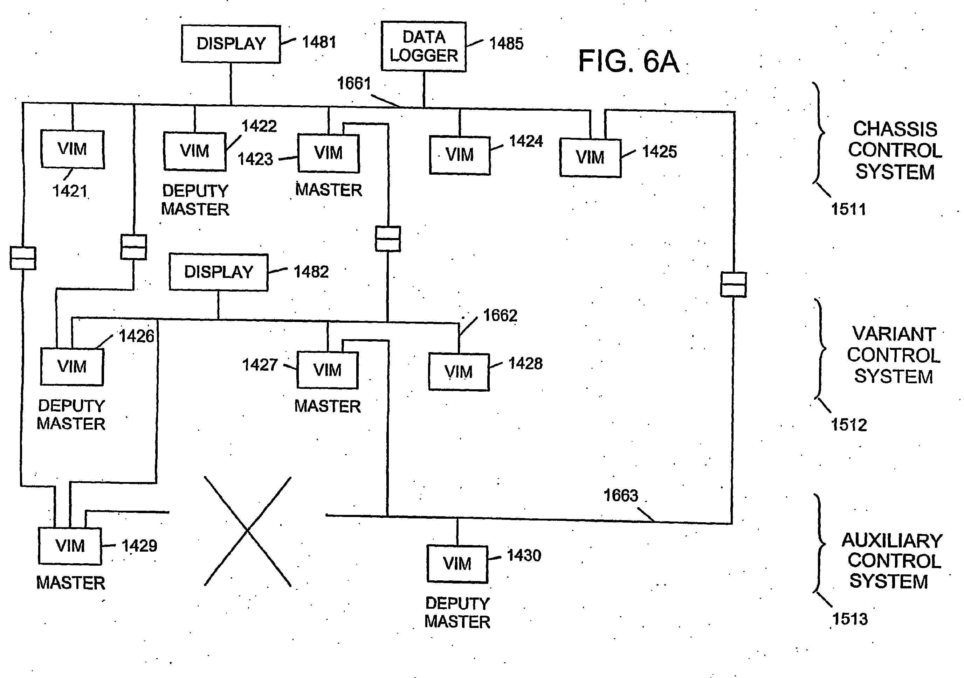

Referring next to Fig. 5, the interconnection of the interface modules 1420 by way of the communication network 1460 is illustrated. As previously indicated, the control system 1412 is subdivided into three control systems 1511; 1512 and 1513. In accordance with this arrangement, the communication network 1460 (Fig. 3) is likewise further subdivided into three communication networks 1661,1662, and 1663 (Fig. 5). The communication network 1661 is associated with the chassis control system 1511 and interconnects the interface modules 1421-1425. The communication network 1662 is associated with the variant control system 1512 and interconnects the interface modules 1426-1428. The communication network 1663 is associated with the auxiliary control system 1513 and interconnects the interface modules 1429-1430. Communication between the control systems 1511-1513 occurs by way of interface modules that are connected to multiple ones of the networks 1661-1663. Advantageously, this arrangement also allows the interface modules to reconfigure themselves to communicate over another network in the event that part or all of their primary network is lost. For example, in Fig. 6A, when a portion of the communication network 1663 is lost, the interface module 1429 reconfigures itself to communicate with the interface module 1430 by way of the communication network 1662 and the interface module 1427.

In practice, each of the communication networks 1661-1663 may be formed of two or more communication networks to provide redundancy within each control system. Indeed, the connection of the various interface modules 1420 with different networks can be as complicated as necessary to obtain the desired level of redundancy. For simplicity, these potential additional levels of redundancy will be ignored in the discussion of Fig. 5 contained herein.

The communication networks 1661-1663 may be implemented in accordance with SAE J 1708/1587 and/or J1939 standards, or some other network protocols, as previously described. The transmission medium is preferably fiber optic cable in order to reduce the amount of electromagnetic radiation that the military vehicle 1410 produces, therefore making the vehicle less detectable by the enemy. Fiber optic networks are also more robust to the extent that a severed fiber optic cable is still usable to create two independent networks, at least with reduced functionality.

When the variant module 1413 is mounted on the chassis 1417, connecting the chassis control system 1511 and the variant control system 1512 is achieved simply through the use of two mating connectors 1681 and 1682 that include connections for one or more communication busses, power and ground. The chassis connector 1682 is also physically and functionally mateable with connectors for other variant modules, i. e., the chassis connector and the other variant connectors are not only capable of mating physically, but the mating also produces a workable vehicle system. A given set of switches or other control devices 1651 on the dash (see Fig. 3) may then operate differently depending on which variant is connected to the chassis 1417. Advantageously, therefore, it is possible to provide a single interface between the chassis 1417 and the variant module 1413 (although multiple interfaces may also be provided for redundancy). This avoids the need for a separate connector on the chassis 1417 for each different type of variant module, along with the additional unutilized hardware and wiring, as has conventionally been the approach utilized.

Upon power up, the variant control system 1512 and the chassis control system 1511 exchange information that is of interest to each other. For example, the variant control system 1512 may communicate the variant type of the variant module 141.3. Other parameters may also be communicated. For example, information about the weight distribution on the variant module 1413 may be passed along to the chassis control system 1511, so that the transmission shift schedule of the transmission 1493 can be adjusted in accordance with the weight of the variant module 1413, and so that a central tire inflation system can control the inflation of tires as a function of the weight distribution of the variant. Similarly, information about the chassis can be passed along to the variant. For example, where a variant module is capable of being used by multiple chassis with different engine sizes, engine information can be communicated to a wrecker variant module so that the wrecker variant knows how much weight the chassis is capable of pulling. Thus, an initial exchange of information in this manner allows the operation of the chassis control system 1511 to be optimized in accordance with parameters of the variant module 1413, and vice versa.

It may also be noted that the advantages obtained for military variants can also be realized in connection with commercial variants. Thus, a blower module, a sweeper module, and a plow module could be provided for the same chassis. This would allow the chassis to be used for a sweeper in summer and a snow blower or snow plow in winter.

As shown in Fig. 5, each control system 1511-1513 includes an interface module that is designated "master" and another that is designated "deputy master." Thus, for example, the chassis control system 1511 incudes a master interface module 1423 and a deputy master interface module 1422. Additional tiers of mastership may also be implemented in connection with the interface modules 1421,1424 and 1425.

The interface modules 1420 are assigned their respective ranks in the tiers of mastership based on their respective locations on the military vehicle 1410. A harness connector at each respective location of the military vehicle 1410 connects a respective one of the interface modules 1420 to the remainder of the control system 1412 (Fig. 3). The harness connector is electronically keyed, such that being connected to a particular harness connector provides an interface module1420 with a unique identification code or address M. For simplicity, the value M is assumed to be a value between 1 and N, where N is the total number of interface modules on the vehicle (M = 10 in the illustrated embodiment).

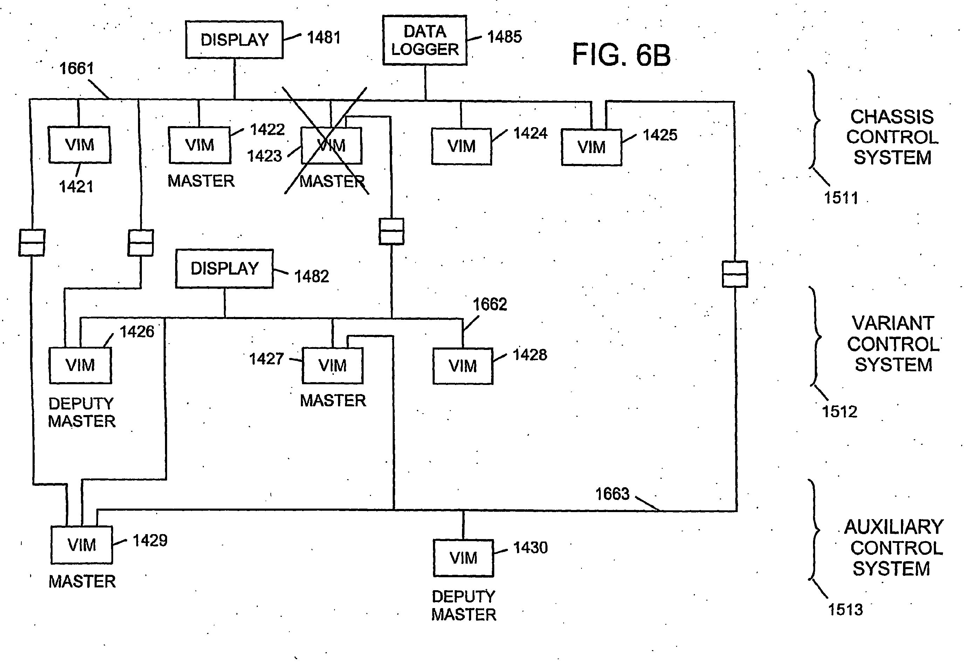

The interface modules 1420 each store configuration information that, among other things, relates particular network addresses with particular ranks of mastership. Thus, for example, when the interface module 1423 boots up, it ascertains its own network address and, based on its network address, ascertains that it is the master of the control system 1511. The interface module 1423 serves as the central control unit so long as the interface module 1423 is competent to do so. As shown in Fig. 6B, if it is determined that the interface module 1423 is no longer competent to serve as master (e. g. , because the interface module 1423 has been damaged in combat), then the interface module 1422 becomes the master interface module and begins serving as the central control unit. This decision can be made, for example, by the interface module 1423 itself, based on a vote taken by the remaining interface modules 1420, or based on a decision by the deputy master.

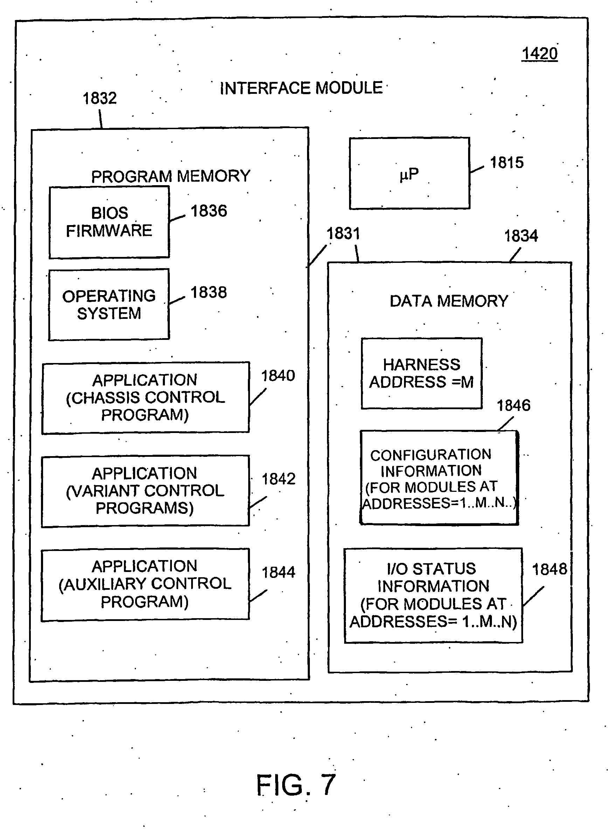

Referring next to Fig. 7, an exemplary one of the interface modules 1420 is shown in greater detail. The interface modules 1420 each include a microprocessor 1815 that is sufficiently powerful to allow each interface module to serve as the central control unit. The interface modules are identically programmed and each include a memory 1831 that further includes a program memory 1832 and a data memory 1834. The program memory 1832 includes BIOS (basic input/output system) firmware 1836, an operating system 1838, and application programs 1840,1842 and 1844. The application programs include a chassis control program 1840, one or more variant control programs 1842, and an auxiliary control program 1844. The data memory 1834 includes configuration information 1846 and I/O status information 1848 for all of the modules 1420-1430 associated with the chassis 1417 and its variant module 1413, as well as configuration information for the interface modules (N + 1 to Z in Fig. 7) of other variant modules that are capable of being mounted to the chassis 1417.

It is therefore seen that all of the interface modules 1420 that are used on the chassis 1417 and its variant module 1413, as well as the interface modules 1420 of other variant modules that are capable of being mounted to the chassis 1417, are identically programmed and contain the same information. Each interface module 1420 then utilizes its network address to decide when booting up which configuration information to utilize when configuring itself, and which portions of the application programs 1840-1844 to execute given its status as a master or non-master member of one of the controls systems 1511-1513. The interface modules are both physically and functionally interchangeable because the interface modules are capable of being plugged in at any slot on the network, and are capable of performing any functions that are required at that slot on the network.

This arrangement is highly advantageous. Because all of the interface modules 1420 are identically programmed and store the same information, the interface modules are physically and functionally interchangeable within a given class of vehicles. Thus, if an interface module 1420 on one variant module is rendered inoperative, but the variant module is otherwise operational, the inoperative interface module can be replaced with an interface module scavenged from another inoperative vesicle. When the replacement interface module 1420 reboots, it will then reconfigure itself for use in the new vehicle, and begin operating the correct portions of the application programs 1840-1844. This is the case even when the two vehicles are different types of vehicles.

Additionally, if a highly critical interface module is rendered inoperable, the highly critical interface module can be swapped with an interface module that is less critical. Although the input/output devices associated with the less critical interface module will no longer be operable, the input/output devices associated with the more critical interface module will be operable. This allows the effectiveness of the military vehicle to be maximized by allowing undamaged interface modules to be utilized in the most optimal manner. In this way, the field serviceability of the control system 1412 is dramatically improved. Further, the field serviceability of the control system 1412 is also improved by the fact that only a single type of interface module is used, because the use of a single type of interface module makes it easier to find replacement interface modules.

Additionally, as previously noted, each interface module 1420 stores I/O status information for all of the modules 1420-1430 associated with the chassis 1417 and its variant module 1413. Therefore, each interface module 1420 has total system awareness. As a result, it is possible to have each interface module 1420 process its own inputs and outputs based on the I/O status information in order to increase system responsiveness and in order to reduce the amount of communication that is required with the central control unit. The main management responsibility of the central control unit 14 (Fig. 1) or master interface module (Fig. 5) above and beyond the responsibilities of all the other interface modules 1420 then becomes, for example, to provide a nexus for interface operations with devices that are external to the control system of which the central control unit is a part.

### C. I/O Status Communication

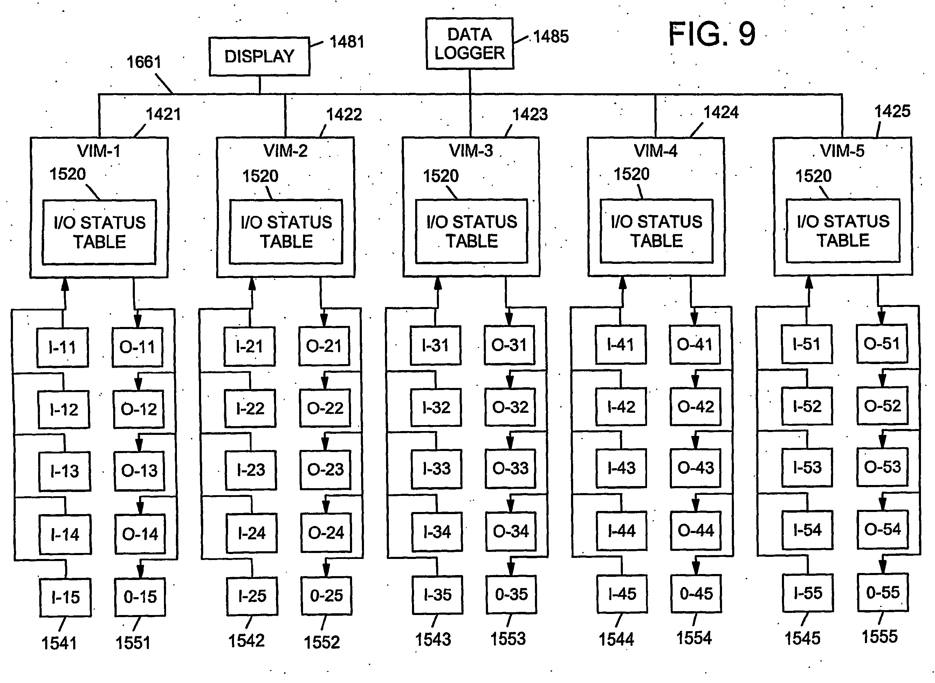

As previously described, each interface modules 1420 has total system awareness and it is possible to have each interface modules 1420 process its own inputs and outputs based on the I/O status information in order to increase system responsiveness and in order to reduce the amount of communication that is required. Specifically, the data memory 1834 (Fig. 7) of each interface module 1420 stores I/O status information 1848 for not only local I/O devices 1440 and 1450 but also for non-local I/O devices 1440 and 1450 connected to remaining ones of the interface modules 1420. Referring now to Figs. 9-12, a preferred technique for transmitting I/O status information between the interface modules 1420 will now be described. Although this technique is primarily described in connection with the chassis control system 1511, this technique is preferably also applied to the variant control system 1512 and the auxiliary control system 1513, and/or in the control system 12 (Fig. 1).

Referring first to Fig. 9, as previously described, the chassis control system 1511 (Fig. 4) includes the interface modules 1421-1425, the input devices 1441, and the output devices 1451. Also shown in Fig. 9 are the display 1481, the data logger 1485, and the communication network 1661 which connects the interface modules 1421-1425. In practice, the system may include additional devices, such as a plurality of switch interface modules connected to additional I/O devices, which for simplicity are not shown. The switch interface nodules may be the same as the switch interface modules 20 previously described and, for example, may be provided in the form of a separate enclosed unit or in the more simple form of a circuit board mounted with associated switches and low power output devices. In practice, the system may include other systems, such as a display interface used to drive one or more analog displays (such as gauges) using data received from the communication network 1661. Any additional modules that interface with I/O devices preferably broadcast and receive I/O status information and exert local control in the same manner as detailed below in connection with the interface modules 1421-1425. As previously noted, one or more additional communication networks may also be included which are preferably implemented in accordance with SAE J 1708/1587 and/or J 1939 standards. The communication networks may be used, for example, to receive I/O status information from other vehicles systems, such as an engine or transmission control system. Arbitration of I/O status broadcasts between the communication networks can be performed by one of the interface modules 1420.

To facilitate description, the input devices 1441 and the output devices 1451 (as shown in Fig. 4) have been further subdivided and more specifically labeled in Fig. 9. Thus, the subset of the input devices 1441 which are connected to the interface module 1421 are collectively labeled with the reference numeral 1541 and are individually labeled as having respective input states 1-11 to 1-15. Similarly, the subset of the output devices 145. 1 which are connected to the interface module 1421 are collectively labeled with the reference numeral 1551 and are individually labeled as having respective output states 0-11 to 0-15. A similar pattern has been followed for the interface modules 1422-1425, as summarized in Table I below : Interface Input Output Module Devices Input States Devices Output States 1421 1541 1-11 to 1-15 1551 0-11 to 0-15 1422 1542 1-21 to 1-25 1552 0-21 to 0-25 1423 1543 1-31 to 1-35 1553 0-31 to 0-35 1424 1544 1-41 to 1-45 1554 0-41 to 0-45 1425 1545 1-51 to 1-55 1555 0-51 to 0-55 Table I.

Of course, although five input devices 1441 and five output devices 1451 are connected to each of the interface modules 1420 in the illustrated embodiment, this number of I/O devices is merely exemplary and a different number of devices could also be used, as previously described.

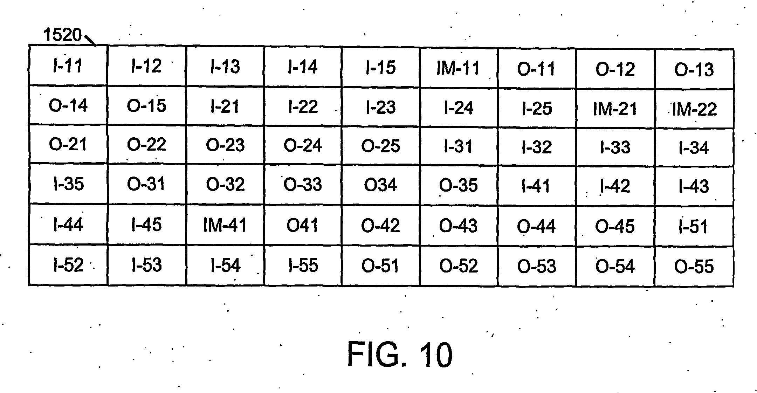

The interface modules 1420 each comprise a respective I/O status table 1520 that stores information pertaining to the I/O states of the input and output devices 1541 and 1551. Referring now to Fig. 10, an exemplary one of the I/O status tables 1520 is shown. As shown in Fig. 10, the I/O status table 1520 stores I/O status information pertaining to each of the input states 1-11 to 1-15, 1-21 to 1-25,1-31 to 1-35, 1-41 to 1-45, and 1-51 to 1-55 of the input devices 1541-1545, respectively, and also stores I/O status information pertaining to each of the output states 0-11 to 0-15, 0-21 to 0-25, 0-31 to 0-35, 0-41 to 0-45, and 0-51 to 0-55 of the output devices 1551-1555, respectively. The I/O status tables 1520 are assumed to be identical, however, each I/O status table 1520 is individually maintained and updated by the corresponding interface module 1420. Therefore, temporary differences may exist between the I/O status tables 1520 as updated I/O status information is received and stored. Although not shown, the I/O status table 1520 also stores I/O status information for the interface modules 1426-1428 of the variant control system 1512 and the interface modules 1429-1430 of the auxiliary control system 1513.

In practice, although Fig. 10 shows the I/O status information being stored next to each other, the memory locations that store the I/O status information need not be contiguous and need not be located in the same physical media. It may also be noted that the I/O status table 1520 is, in practice, implemented such that different I/O states are stored using different amounts of memory. For example, some locations store a single bit of information (as in the case of a digital input device or digital output device) and other locations store multiply bits of information (as in the case of an analog input device or an analog output device). The manner in which the I/O status table is implemented is dependent on the programming language used and on the different data structures available within the programming language that is used. In general, the term I/O status table is broadly used herein to encompass any group of memory locations that are useable for storing I/O status information.

Also shown in Fig. 10 are a plurality of locations that store intermediate status information, labeled IM-11, IM-21, IM-22, and IM-41. The intermediate states IM-11, IM-21, IM-22, and IM-41 are processed versions of selected I/O states. For example, input signals may be processed for purposes of scaling, unit conversion and/or calibration, and it may be useful in some cases to store the processed I/O status information. Alternatively, the intermediate states IM-11, IM-21, IM-22, and IM-41 may be a function of a plurality of I/O states that in combination have some particular significance. The processed I/O status information is then transmitted to the remaining interface modules 1420.

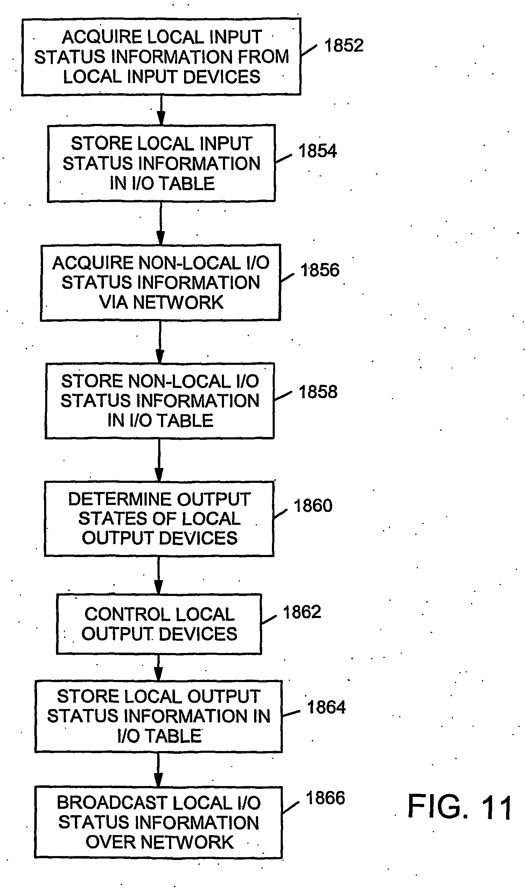

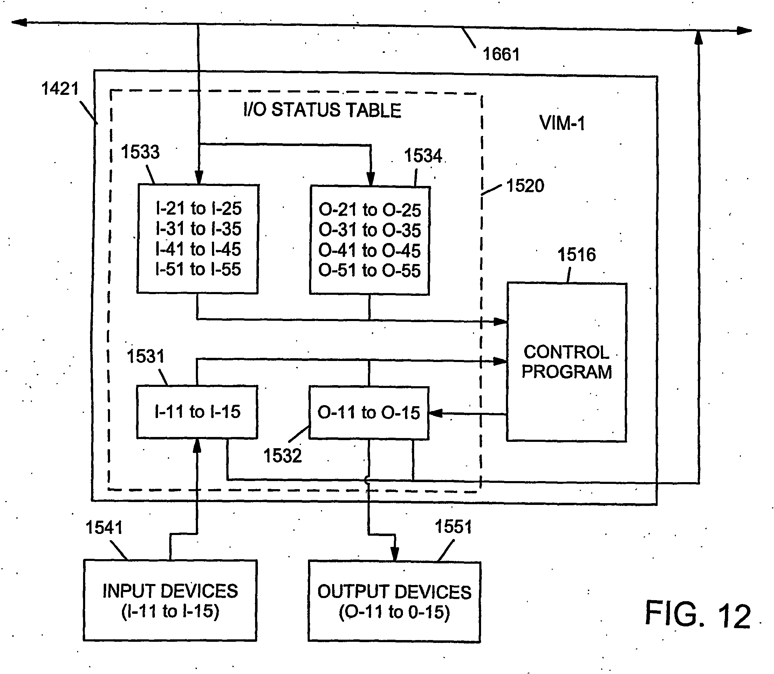

Referring now to Figs. 11-12, Fig. 11 is a flowchart describing the operation of the control system of Fig. 9, and Fig. 12 is a data flow diagram describing data flow through an exemplary interface module 1421, comprising a control program 1516, during the process of Fig. 11. As an initial matter, it should be noted that although Fig. 11 depicts a series of steps which are performed sequentially, the steps shown in Fig. 11 need not be performed in any particular order. In practice, for example, modular programming techniques are used and therefore some of the steps are performed essentially simultaneously. Additionally, it may be noted that the steps shown in Fig. 11 are performed repetitively during the operation of the interface module 1421, and some of the steps are in practice performed more frequently than others. For example, input information is acquired from the input devices more often than the input information is broadcast over the communication network. Although the process of Fig. 11 and the data flow diagram of Fig. 12 are primarily described in connection with the interface module 1421, the remaining interface modules 1422-1425 operate in the same manner.

At step 1852, the interface module 1421 acquires input status information from the local input devices 1541. The input status information, which pertains to the input states 1-11 to 1-15 of the input devices 1541, is transmitted from the input devices 1541 to the interface module 1421 by way of respective dedicated communication links. At step 1854, the input status information acquired from the local input devices 1541 is stored in the I/O status table 1520 at a location 1531. For the interface module 1421, the I/O devices 1541 and 1551 are referred to as local I/O devices since the I/O devices 1541 and 1551 are directly coupled to the interface module 1421 by way of respective dedicated communication links, as opposed to the remaining non-local I/O devices and 1542-1545 and 1552-1555 which are indirectly coupled to the interface module 1421 by way of the communication network 1661.

At step 1856, the interface module 1421 acquires I/O status information for the non-local input devices 1542-1545 and the non-local output devices 1552-1555 by way of the communication network 1661. Specifically, the interface module 1421 acquires input status information pertaining to the input states 1-21 to 1-25,1-31 to 1-35, 1-41 to 1-45, 1-51 to 1-55 of the input devices 1542-1545, respectively, and acquires output status information pertaining to the output states 0-21 to 0-25, 0-31 to 0-35, 0-41 to 0-45, 0-51 to 0-55 of the output devices 1552-1555. The input status information and the output status information are stored in locations 1533 and 1534 of the I/O status table 1520, respectively.

At step 1860, the interface module 1421 determines desired output states 0-11 to 0-15 for the output devices 1551. As previously noted, each of the interface modules 1420 stores a chassis control program 1840, one or more variant control programs 1842, and an auxiliary control program 1844. The interface module 1421 is associated with the chassis control system 1511and, therefore, executes a portion of the chassis control program 1840. (The portion of the chassis control program 1840 executed by the interface module 1421 is determined by the location of the interface module 1421 on the military vehicle 1410, as previously described.) The interface module 1421 executes the chassis control program 1840 to determine the desired output states 0-11 to 0-15 based on the I/O status information stored in the I/O status table 1520. Preferably, each interface module 1420 has complete control of its local output devices 1450, such that only I/O status information is transmitted on the communication network 1460 between the interface modules 1420.

At step 1862, the interface module 1421 controls the output devices 1551 in accordance with the desired respective output states 0-11 to 0-15. Once the desired output state for a particular output device 1551 has been determines, control is achieved by transmitting a control signal to the particular output device 1551 by way of a dedicated communication link. For example, if the output is a digital output device (e. g. , a headlight controlled in on/off fashion), then the control signal is provided by providing power to the headlight by way of the dedicated communication link. Ordinarily, the actual output state and the desired output state for a particular output device are the same, especially in the case of digital output devices. However, this is not always the case. For example, if the headlight mentioned above is burned out, the actual output state of the headlight may be"off, "even though the desired output state of the light is "on. "Alternatively, for an analog output device, the desired and actual output states may be different if the control signal is not property calibrated for the output device.

At step 1864, the interface module 1421 stores output status information pertaining to the desired output states 0-11 to 0-15 for the output devices 1551 in the I/O status table 1520. This allows the output states 0-11 to 0-15 to be stored prior to being broadcast on the communication network 1661. At step 1866, the interface module 1421 broadcasts the input status information pertaining to the input states 1-11 to 1-15 of the input devices 1541 and the output status information pertaining to the output states 0-11 to 0-15 of the output devices 1551 over the communication network 1661. The I/O status information is received by the interface modules 1422-1425. Step 1866 is essentially the opposite of step 1856, in which non-local I/O status information is acquired by the interface module 1421 by way of the communication networks 1661. In other words, each interface module 1420 broadcasts its portion of the I/O status table 1520 on the communication network 1661, and monitors the communication network 1661 for broadcasts from the remaining interface modules 1420 to update the I/O status table 1520 to reflect updated I/O states for the non-local I/O devices 1441 and 1451. In this way, each interface module 1420 is able to maintain a complete copy of the I/O status information for all of the I/O devices 1441 and 1451 in the system.

The interface modules 1423 and 1425 are used to transmit I/O status information between the various control systems 1511-1513. Specifically, as previously noted, the interface module 1423 is connected to both the communication network 1661 for the chassis control system 1511 and to the communication network 1662 for the variant control system 1512 (see Fig. 5). The interface module 1423 is preferably utilized to relay broadcasts of I/O status information back and forth between the interface modules 1421-1425 of the chassis control system 1511 and the interface modules 1426-1428 of the variant control system 1512. Similarly, the interface module 1425 is connected to both the communication network 1661 for the chassis control system 1511 and to the communication network 1663 for the auxiliary control system 1513 (see Fig. 5), and the interface module 1425 is preferably utilized to relay broadcasts of I/O status information back and forth between the interface modules 1421-1425 of the chassis control system 1511 and the interface modules 1429-1430 of the auxiliary control system 1513.

The arrangement of Figs. 9-12 is advantageous because it provides a fast and efficient mechanism for updating the I/O status information 1848 stored in the data memory 1834 of each of the interface modules 1420. Each interface module 1420 automatically receives, at regular intervals, complete I/O status updates from each of the remaining interface modules 1420. There is no need to transmit data request (polling) messages and data response messages (both of which require communication overhead) to communicate information pertaining to individual I/O states between individual I/O modules 1420. Although more I/O status data is transmitted, the transmissions require less overhead and therefore the overall communication bandwidth required is reduced.

This arrangement also increases system responsiveness. First, system responsiveness is improved because each interface module 1420 receives current I/O status information automatically, before the information is actually needed. When it is determined that a particular piece of I/O status information is needed, there is no need to request that information from another interface module 1420 and subsequently wait for the information to arrive via the communication network 1661. The most current I/O status information is already assumed to be stored in the local I/O status table 1520. Additionally, because the most recent I/O status information is always available, there is no need to make a preliminary determination whether a particular piece of I/O status information should be acquired. Boolean control laws or other control laws are applied in a small number of steps based on the I/O status information already stored in the I/O status table 1520. Conditional control loops designed to avoid unnecessarily acquiring I/O status information are avoided and, therefore, processing time is reduced.

It may also be noted that, according to this arrangement, there is no need to synchronize the broadcasts of the interface modules 1420. Each interface module 1420 monitors the communication network 1661 to determine if the communication network 1661 is available and, if so, then the interface module broadcasts the I/O status information for local I/O devices 1441 and 1451. (Standard automotive communication protocols such as SAE J1708 or J1939 provide the ability for each member of the network to monitor the network and broadcast when the network is available.) Although it is desirable that the interface modules rebroadcast I/O status information at predetermined minimum intervals, the broadcasts may occur asynchronously.

The technique described in connection with Figs. 9-12 also provides an effective mechanism for detecting that an interface module 1420 has been rendered inoperable, for example, due to damage incurred in combat. As just noted, the interface modules 1420 rebroadcast I/O status information at predetermined minimum intervals. Each interface module 1420 also monitors the amount of time elapsed since an update was received from each remaining interface module 1420. Therefore, when a particular interface module 1420 is rendered inoperable due to combat damage, the inoperability of the interface module 1420 can be detected by detecting the failure of the interface module 1420 to rebroadcast its I/O status information within a predetermined amount of time. Preferably, the elapsed time required for a particular interface module 1420 to be considered inoperable is several times the expected minimum rebroadcast time, so that each interface modules 1420 is allowed a certain number of missed broadcasts before the interface module 1420 is considered inoperable. A particular interface module 1420 may be operable and may broadcast I/O status information, but the broadcast may not be received by the remaining interface modules 1420 due, for example, to noise on the communication network.

This arrangement also simplifies the operation of the data logger 1485 and automatically, permits the data logger 1485 to store I/O status information for the entire control system 1412. The data logger 1485 monitors the communication network 1661 for I/O status broadcasts in the same way as the interface modules 1420. Therefore, the data logger 1485 automatically receives complete system updates and is able to store these updates for later use.

As previously noted, in the preferred embodiment, the interface modules 1423 and 1425 are used to transmit I/O status information between the various control systems 1511-1513. In an alternative arrangement, the interface module 142g which is connected to all three of the communication networks 1661-1663 could be utilized instead. Although less preferred, the interface module 1429 may be utilized to receive I/O status information from each of the interface modules 1421-1428 and 1430, assemble the I/O status data into an updated I/O status table, and then rebroadcast the entire updated I/O status table 1520 to each of the remaining interface modules 1421-1428 and 1430 at periodic or aperiodic intervals. Therefore, in this embodiment, I/O status information for the all of the interface modules 1420 is routed through the interface module 1429 and the interface modules 1420 acquire I/O status information for non-local I/O devices 1440 and 1450 by way of the interface module 1429 rather than directly from the remaining interface modules 1420.

From the foregoing description, a number of advantages of the preferred military vehicle control system are apparent, some of which have already been mentioned. First, the control system is constructed and arranged such that failure at a single location does not render the entire vehicle inoperable. The control system has the ability to dynamically reconfigure itself in the event that one or more interface modules are lost. By avoiding the use of a central control unit that is fixed at one location, and using a moving central control unit, there is no single point failure. If a master interface modules fails, another interface module will assume the position of the central control unit.

Additionally, because the interface modules are interchangeable, if one interface module is damaged, it is possible to field service the control system by swapping interface modules, obtained either from within the vehicle itself or from another vehicle, even if the other vehicle is not the same variant type. This allows the effectiveness of the military vehicle to be maximized by allowing undamaged interface modules to be utilized in the most optimal manner.

The use of the control system 1412 in connection with multipurpose modular vehicles is also advantageous. When the variant module 1413 is mounted to the chassis 1417, all that is required is to connect power, ground and the communication network. Only one connector is required for all of the different types of variants. This avoids the need for a separate connector on the chassis for each different type of variant module, along with the additional utilized hardware and wiring, as has conventionally been the approach utilized.

Moreover, since every interface module 1420 has a copy of the application program, it is possible to test each interface module as an individual unit. The ability to do subassembly testing facilitates assembly of the vehicle because defective mechanisms can be replaced before the entire vehicle is assembled.

Finally, the advantages regarding flexibility, robustness, ease of use, maintainability, and so on, that were discussed above in connection with fire fighting vehicles also apply to military vehicles. For example, it is often desirable in military applications to provide vehicles with consoles for both a left-hand driver and a righthand driver. This option can be implemented without complex wiring arrangements with the preferred control system, due to the distributed data collection and the intelligent processing of information from input devices. Likewise, features such as "smart start" (in which vehicle starting is controlled automatically to reduce faculty starts due to operator error) can be implemented by the control system without any additional hardware.

### D. Electric Traction Vehicle

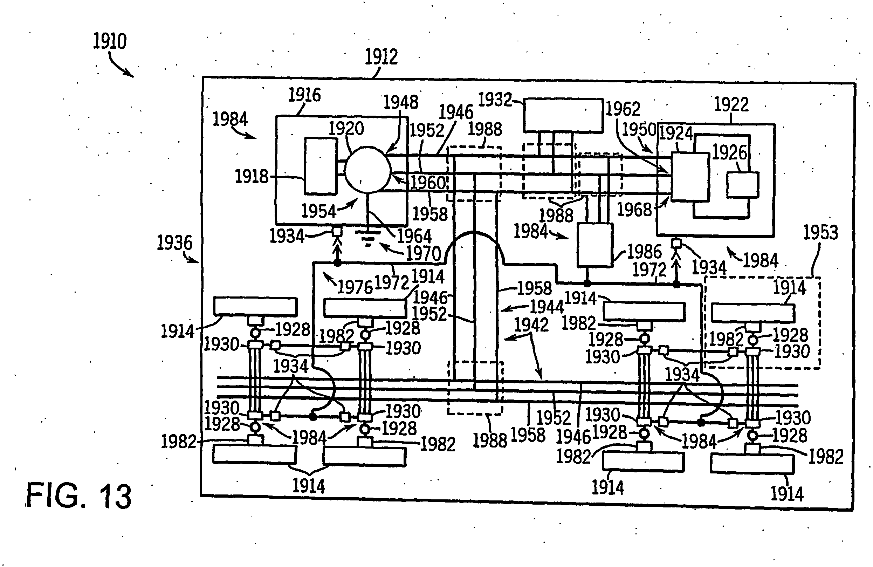

Referring now to Figs. 13-17, a control system for an electric traction vehicle 1910 is shown. An electric traction vehicle is a vehicle that uses electricity in some form or another to provide all or part of the propulsion power of the vehicle. This electricity can come from a variety of sources, such as stored energy devices relying on chemical conversions (batteries), stored electrical charge devices (capacitors), stored energy devices relying on mechanical stored energy (e. g. flywheels, pressure accumulators), and energy conversion products. A hybrid electric vehicle is an electric traction vehicle that uses more than one sources of energy, such as one of the electrical energy storage devices mentioned above and another source, such as an internal combustion engine. By having more than one source of energy some optimizations in the design can allow for more efficient power production, thus one can use power from different sources to come up with a more efficient system for traction. The disclosure herein can be used to implement electric vehicles in general and/or hybrid electric vehicles in particular. The electric vehicle 1910 can implement any of the other vehicle types described herein (e. g. , fire fighting vehicle, military vehicle, snow blower vesicle, refuse-handling vehicles, concrete mixing vehicle) as well as others not described herein. Thus, the following teachings regarding the electric vehicle system may be combined with any/all of the teachings contained herein.

The electric traction vehicle 1910 comprises a vehicle platform or vehicle support structure 1912, drive wheels 1914, a power source or principal power unit 1916, a power storage unit 1922, electric motors 1928, servo or drive controllers 1930, an energy dissipation device 1932, and interface modules 1934. The vehicle 1910 further comprises a control system with a plurality of input and output devices which vary depending on the application for which the vehicle 1910 is used. For example, if the vehicle 1910 is a fire truck, then the vehicles 1910 has input and output devices such as those described in connection with Figs. 1-2 in connection with the fire truck 10. Except to the extent that different I/O devices are used, the control system is the same as the control system 1412 as described in Figs. 3-12 and is used to receive inputs from these input devices and control these output devices. The interface modules 1934 are part of this control system and preferably are constructed and operate in the same manner as the interface modules 1420 as described above. Specifically, each interface module 1934 preferably processes its own inputs and outputs based on I/O status information received via I/O status broadcasts from the other interface modules 1934.

Interconnecting the interface modules 1934 on the electric traction vehicle 1910 is a communication network 1976 and an AC power bus assembly 1942 through which the vehicle and its various functions are controlled and operated. The communication network 1976 corresponds to the communication network 60 of Fig. 2 in the case of an electric fire truck vehicle and to the communication network 1460 in the case of a electric military vehicle. The communication network 1976 is used to communicate I/O status information between the interface modules 1934. The AC bus assembly 1942 is a power transmission link and corresponds to the power transmission link 102 of Fig. 2 in the case of an electric fire truck vehicle and to the power transmission link 1502 of Fig. 4 in the case of an electric military vehicle. Also connected to the AC bus assembly 1942 are the principal power unit 1916, the power storage unit 1922, and the energy dissipation device 1932. The interface modules 1934 include rectifier circuitry to convert AC power from the AC bus assembly 1942 to DC power for output devices such as LED indicators. Also, it may be noted that the AC power is also provided directly to the drive controllers 1930, which operate under the control of the interface modules 1934. It is also contemplated that wireless communication between the interface modules 1934 and the various modules 1984 can be achieved including communication of signals 1972 via radio waves, microwaves, and fiber optical paths including relay via satellite to a central command center.

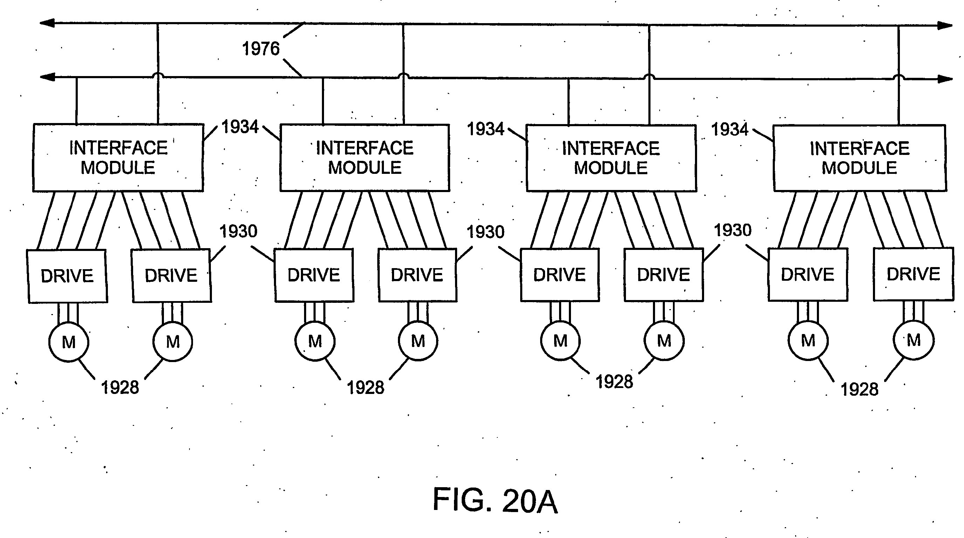

With reference to Fig. 20A-20B, it may be noted that many commercially-available servo drive controllers may be network-enabled and therefore an option exists as to the manner in which the interface modules 1934 are connected to the drive controllers 1930. Thus, in Fig. 20A, each interface module 1934 is connected to one or more drive controllers 1930 by way of dedicated communication links for hardwired control of the drive controllers 1930. In the illustrated embodiment, three digital links and one analog link are shown for each drive controller 1930 representing, for example, a stop/run output, a forward/reverse output, a generation/regeneration output, and a variable torque command (0-100%) output from the interface module 1934. As indicated in Fig. 13, power from the AC bus assemble 1942 is provided directly to the drive controllers 1930 (rather than through the interface modules 1934), and therefore each of the dedicated communication links is used to transmit only information and not power. Each interface module 1934 is then connected to the communication network 1976 which, in Fig. 20A, is implemented as two separate networks (e. g., a network dedicated for use with the interface modules 1934, and a separate J 1939 network to connect to the electronic control units for the engine, transmission, anti-lock brake and central tire inflation systems).

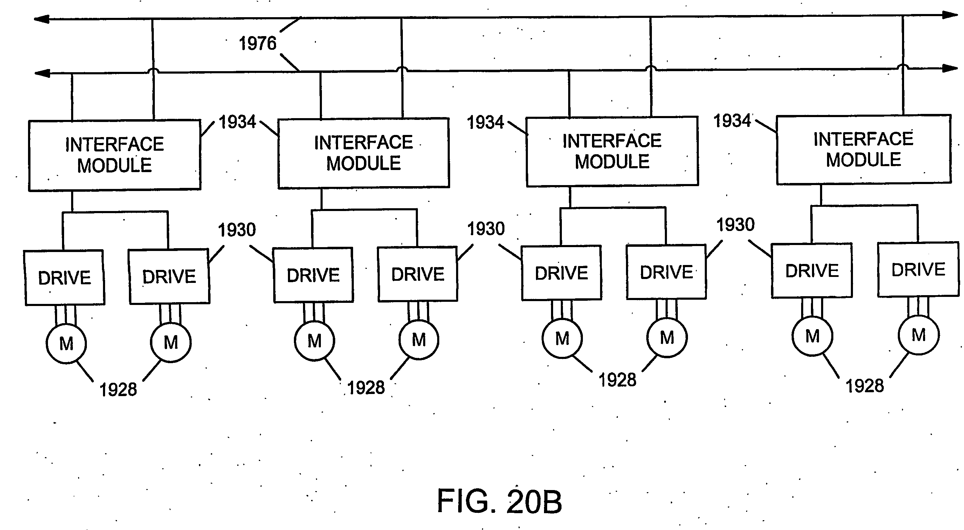

In Fig. 20B, each interface module 1934 is connected to one or more drive controllers 1939 by way of a communication network for network control of the drive controllers 1930. The same information may be transmitted as in Fig. 20A except that the information is transmitted by way of the communication network. Because the AC bus assembly 1942 is connected directly to the drive controllers 1930, there is no need to transmit power from the interface modules 1934 to the drive controllers 1930. Each interface module 1934 is then connected to the communication network 1976. If only two network ports are included on the interface modules 1934, then information obtained from the electronic control units for the engine, transmission, anti-lock brake and central tire inflation systems may be obtained from other interface modules (not shown) connected to a J1939 network. Alternatively, the interface modules 1934 may be provided with a third network port.

The electric motors 1928 are appropriately sized traction motors. An exemplary embodiment of an electric traction vehicle 1910 employs an AC, three phase induction electric motor having a simple cast rotor, machine mount stator and sealed ball bearings. An induction motor is preferred because it avoids brushes, internal switches and sliding contact devices, with the rotor being the only moving part of the traction motor. Control of the electric motor 1928 is achieved by the interface module 1934 through the drive controller 1930 which is coupled to the motor 1928. The torque output of the motor 1928 is adjusted based on inputs received from the operator and transmitted to the interface module 1934 over the communication network 1976.

The drive wheels 1914 are rotatably mounted on the vehicle platform 1912 with an electric motor 1928 coupled to at least one wheel 1914. In one embodiment, the drive wheels 1914 are each coupled to respective electric motors 1928, which in turn are each coupled to respective drive controllers 1930, which in turn are coupled to respective interface modules 1934.

Various embodiments of an electric traction vehicle 1910 are based on the number of wheels 1914 that are driven on the vehicles 1910. For instance, one embodiment includes a drive wheel 1914 coupled to an electric motor 1928, which in turn is coupled to a drive controller 1930, which in turn is coupled to an interface module 1934, which in turn is coupled to other interface modules (for other vehicle I/O) by way of the communication network 1976. The vehicle 1910 can also include four drive wheels 1914 coupled to four respective electric motors 1928, which in turn are coupled to four respective drive controllers 1930, which in turn are coupled to four respective interface modules 1934, which in turn are coupled to other interface modules 1934 and to each other by way of the communication network 1976. In the embodiment of Fig. 13, eight drive wheels 1914 are coupled to eight respective electric motors 1928, which in turn are coupled to eight respective drive controllers 1930, which in turn are coupled to eight respective interface modules 1934, which in turn are coupled to other interface modules 1934 and to each other by way of the communication network 1976. Other configurations may also be used, and the ratio of motors, wheels, servo drives and interface modules need not be one-to-one relative to each other. Thus, for example, each interface module 1934 may control one wheel 1914, one axle, a tandem set of axles, or other set of wheels. As described in greater detail below, the vehicle 1910 can also include pairs of drive wheels 1914 which are driven in tandem by a respective one of the plurality of electric motors 1928. Typically, at least two of the wheels 1914 are steerable.

The torque output of each motor 1928 is adjusted to meet the requirements established in the associated interface module 1934 from the I/O status information. The electric motors 1928 may operate to produce electric torque to drive the drive wheels 1914 or may operate in a regenerative braking mode to provide power to the power storage unit 1922, as determined by inputs received from an operator of the electric traction vehicle 1910.

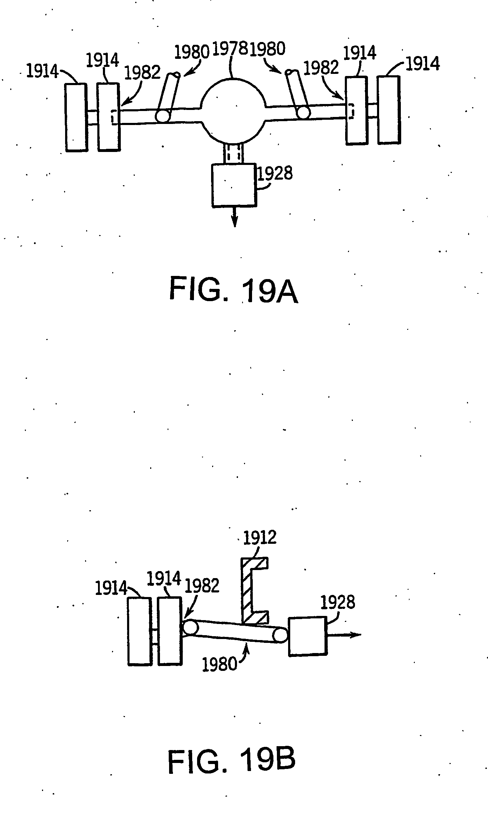

The electric traction vehicle 1910 can be configured with one or more modular independent coil spring suspensions 1980 (cf. Fig. 19A, 19B) for steerable and non-steerable wheel assemblies and driver and non-driver axles. Details of such modular independent coil spring suspensions can be found in U. S. Patent Nos. 5,538, 274,5, 820,150, and 6,105, 984, which are assigned to the assignee of the present invention.

The principal power unit 1916 and the power storage unit 1922 are mounted on the vehicle platform 1912. As previously noted, the principal power unit 1916 provides power for multiple electric motors 1928 coupled to individual drive wheels 1914. This simplifies the transmission of power to the wheels 1914 as compared to a non-electric vehicle by eliminating the torque converter, transmission, transfer case, and drive shafts. Further, because multiple electric motors 1928 are used, the horse power requirements of each electric motor 1928 are such that standard commercially available electric motors may be used even in the case of a heavy duty military vehicle.

The principal power unit 1916 includes a prime mover or engine 1918 coupled to a generator or alternator 1920. The prime mover 1318 can be a gas turbine or an internal combustion engine. The principal power unit 1916 can also be a fuel cell or a nuclear power device. The fuel cell may for example be a hydrogen-oxygen fuel cell that produces electrical power in the process of a chemical reaction that combines oxygen and hydrogen to create water. If a DC source is used, an inverter may be used to convert DC power from the DC source to AC power for the AC bus assembly 1942. In the preferred embodiment, the prime mover 1918 is a diesel engine optimized for operation at a constant speed (revolutions per minute). Operating the diesel engine at a constant, optimal speed eliminates inefficiencies associated with changing RPM levels during acceleration and deceleration, improves overall efficiency, and reduces emissions.

The generator/alternator 1920 is preferably a synchronous generator producing 460 to 480 volts, three phase, AC 60 Hz power for the electric traction vehicle 1910. However, it is contemplated that different sized generators or alternators can be coupled to the prime mover for purposes of generating either higher or lower electrical power. For instance, a single phase system can be utilized or a system that generates 720 volt power system can be used or a system that operates at a frequency other than 60 Hz, such as 50 Hz which is typical in European countries. It is also contemplated that the power generated by the principal power unit 1916 can be modified by appropriate auxiliary modules such as a step-down transformer to provide power to operate ancillary equipment on or associated with the electric traction vehicle 1910 such as pumps, instruments, tools, lights, and other equipment.

The AC bus assembly 1942 includes a plurality of phase conductors 1944. A first conductor 1946 having a first end 1948 and second end 1950 together with a second conductor 1952 having a first end 1960 and a second end 1962 can be configured together with a neutral 1964 to provide single phase power in one embodiment of the vehicle 1910. A third conductor 1958 having a first end 1954 and a second end 1968 can be used in conjunction with the first conductor 1946 and the second conductor 1952 to provide three phase power as shown in Fig. 13. The conductors 1944 can be stranded metal wire such as copper or aluminum sized and clad to transmit the power generation contemplated in the vehicle 1910 design. The conductors 1944 can also be solid metal bars, generally referred to as bus bars, composed of appropriate clad metals, such as copper or aluminium, as will be appreciated by one ordinarily skilled in the art.

Also connected to the AC power bus assembly 1942 is the power storage unit 1922, as previously mentioned. The power storage unit 1922 includes an electric power converter 1924 and an energy storage device 1926. The power storage unit 1922 can be configured to provide electric powder above and beyond that required of the principal power unit 1916. The energy storage device 1926 can be electric capacitors, storage batteries, a flywheel, or hydraulic accumulators. The electric power converter 1924 can be configured to convert the AC power generated by the principal power unit 1916 to DC power and transfer such converted power to the storage device 1926. The electrical power converter 1924 can also convert the energy stored in the energy storage device 1926 back to AC power to augment and supplement the AC power generated by the principal power unit 1916 over the AC power bus assembly 1942. Applicants have determined that additional horsepower of short-term power can be provided into the AC power bus assembly 1942 over the phase conductors 1944 by discharge of an on-board capacitor or battery pack (energy storage device 1926) under control of the power storage unit 1922. Depending on the application, the additional power may be in the range of 100-600 or more horsepower (74,56-447,36 kW or more), such as 200-300 horsepower (149,12-223,68 kW). In one embodiment, the energy storage device 1926 is formed of a bank of ultracapacitors, such as the PC 2500 ultracapacitor available from Maxwell Technologies, 9244 Balboa Avenue San Diego, CA 92123. These devices provide a high electrical energy storage and power capacity and have the ability to deliver bursts of high power and recharge rapidly from an electrical energy source/sink over hundreds of thousands of cycles.

An advantage constructing the energy storage device 1926 of capacitors is that capacitors are relatively easy to discharge. Therefore, it is possible to discharge the energy storage device 1926 when maintenance is to be performed on the vehicle 1910 to avoid electrocution of maintenance personnel. In Fig. 13, the power storage unit 1922 (including the energy storage device 1926) operates under the control of one of the interface modules 1934. In one embodiment, the interface module 1934 is used to discharge the energy storage device responsive to operator inputs. For example, a capacitor discharge switch may be provided in the cab of the vehicle 1910 and/or near the energy storage device 1926 and coupled to a nearby interface module 1934. When the operator activates the switch, the interface nodules 1934 cooperate responsive to ensure that no electrical power is being coupled to the AC bus assembly 1942 by the generator 1920 and any other power generating devices, such that the energy storage device 1926 is the only power source coupled to the AC bus assembly 1942 (e. g., when the prime mover or engine 1918 is not moving or is not coupled to the AC bus assembly 1942, the generator 1920 does not provide electrical power to the AC bus assembly 1942). Therefore, any stored electrical power in the energy storage device 1926 dissipates to power consuming devices that are coupled to the AC bus assembly 1942. A variety of power consuming devices may be provided for this purpose. For example, an energy dissipation device 1932 (described in greater detail below) may be used for this purpose. The dissipating capacity (e. g. , resistor size and power ratings) of the energy dissipation device may be determined as a function of the desired amount of discharge time. Other power consuming devices already coupled to the AC bus assembly 1942, such as an engine cooling fan, may also be used. In this configuration, the interface module 1934 to which the engine cooling fan is connected turns on the engine cooling fan when it is determined that the operator input at the capacitor discharge switch has been received.

The power storage unit 1922 is coupled to the communication network 1976 and controlled by the interface module 1934. The combined electrical power from the principal power unit 1916 and the power storage unit 1922 will all be available on the AC power bus assembly 1942 for use by the electric motors 1928 or by any other module 1984 or auxiliary module 1986 as determined by the operator at the user interface 1936 of the interface module 1934.

In operation, the power storage unit 1922 receives power from the principal power unit 1916 over conductors 1944 of the AC power bus assembly 1942. The power received is converted into the appropriate energy mode required by the energy storage device 1926 and maintained in the energy storage device 1926 until required during the operation of the vehicle 1910. If the principal power unit 1916 is not functioning for any reason, the energy in the power storage unit can be utilized to operate, for a given period of time, the vehicle 1910 or any of the modules 1984 or auxiliary modules 1986 mounted on the vehicle 1910. In the context of a military vehicle, the power storage unit 1922 may also be used in stealth modes of operation to avoid the noise associated with the prime mover (e. g., diesel engine) 1918 and the generator 1920.

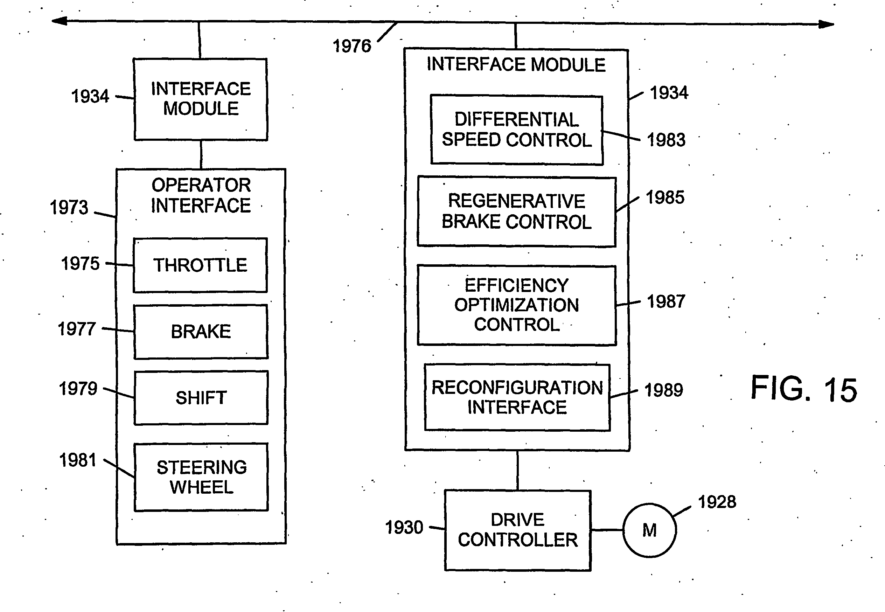

Energy storage recharge of the power storage unit 1922 by the principal power unit 1916 begins automatically and immediately after the vehicle 1910 arrives at its destination and continues during the vehicle's return run to its original location. The state of charge of the power storage unit 1922 is maintained between missions by a simple plug connection to a power receptacle in the vehicle's garage or storage location, which receptacle will automatically disconnect as the vehicle 1910 leaves such site. The power storage unit 1922 can also receive energy generated by the electric motors 1928 when the motors are configured in a regeneration mode in which case they function as a generator. Such functionality is utilized in a braking procedure for the vehicle as determined by the operator at a user interface 1973 (see Fig. 15). The electric motor 1928 and AC power bus assembly 1942 can also be configured to regenerate power back to the principal power unit 1916.

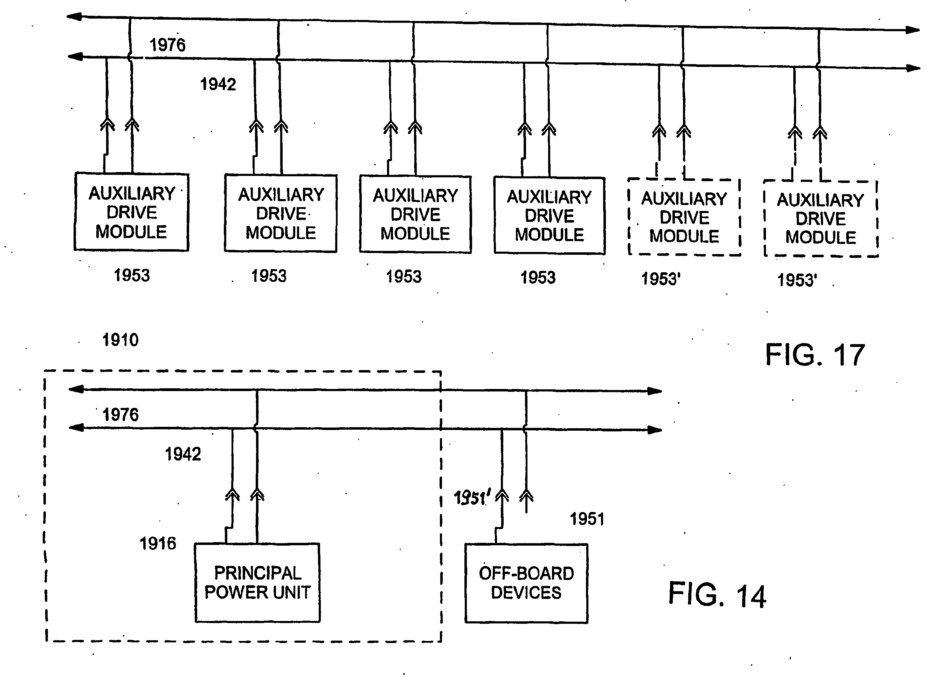

As shown in Fig. 14, the vehicle 1910 can also serve as an on-site power source for off-board electric power consuming devices 1951. For example, in the context of a military vehicle, the vehicle 1910 can serve as a mobile electric generator. When the vehicle is stationary, the electric motors 1928 consume substantially zero power. Therefore, electric power that would otherwise be used to drive movement of the vehicle 1910 can be supplied to off-board equipment. In the context of an ARFF vehicle, if an airport loses electricity due to a failure in the power grid, an ARFF vehicle that implements the system described herein can be used to generate power for the airport by connecting the power bus for the airport to the AC bus assembly 1942 through the use of a suitable connector 1951'. Likewise, at the scene of a fire, the AC bus assembly 1942 can be used to provide power for scene lighting. In one preferred embodiment, the power generating capacity of the vehicle 1910 is in the neighborhood of about 500 kilowatts of electricity, which is enough to power approximately 250-300 typical homes. Depending on the size of the vehicle 1910 and the principal power unit 1916, the power generating capacity may be smaller (e. g., 250 kilowatts) or larger (e. g., 750 kilowatts). Additionally, because the AC bus assembly 1942 provides 480V, three phase, AC 60 Hz power, which is commonly used in industrial settings, there is no need to convert the power from the AC bus assembly 1942. In this regard, in Fig. 14, the off-board power-consuming devices 1951 are shown not to be connected to the communication network 1976, because the power provided by the AC bus assembly 1942 can be provided to a variety of standard devices, including devices which are not specifically designed for use with the vehicle 1910.

Preferably, an energy dissipation device 1932 is coupled to the AC bus assembly 1942 and the communication network 1976. If it is determined that the principal power unit 1916 or the electric motors 1928 or any other auxiliary module 1986 generating too much power or are not utilizing sufficient power, the excess power can be dissipated through the energy dissipation device 1932. An example of an energy dissipation device 1932 is a resistive coil that may be additional cooled by fans or an appropriate fluid. Another example of an energy dissipation device 1932 is a steam generator which utilizes excess heat generated in the vehicle to heat water to produce steam. Another example of an energy dissipation device is to have the system back feed the generator to act as a motor and use the engine as an air pump to pull power out of the system. The energy dissipation device, for example, may be used during regenerative braking when the level of charge in the capacitor bank forming the energy storage device 1926 is near its peak.

Referring now to Fig. 15, selected aspects of the vehicle 1910 of Fig. 13 are shown in greater detail. The vehicles 1910 further comprises an operator interface 1973 which includes a throttle pedal 1975, brake pedal 1977, shift control 1979, and steering wheel 1981. In Fig. 15, these input devices are shown as being connected to a common interface module 1934 which is connected to the communication network 1976 along with the interface modules 1934 coupled to the electric motors 1928 (only one of which is shown in Fig. 15), Although the input devices 1975-1981 are shown as being coupled to a common same interface module, the input devices may also be coupled to different interface modules. The operator interface 1973 may also receive inputs from other input devices to raise or lower the vehicle, lock the suspension (cf. 1980 in Figs. 19A, 19B), control a load-handling system, and control vehicle operation in stealth modes of operation (e. g., operating exclusively on the power storage unit 1922). The operator interface 1973 may include a display that displays information to the operator such as speed, charge level of the storage unit 1922, generator efficiency, direction of travel, alarm status, fuel economy, temperatures, pressures, and data logging information.

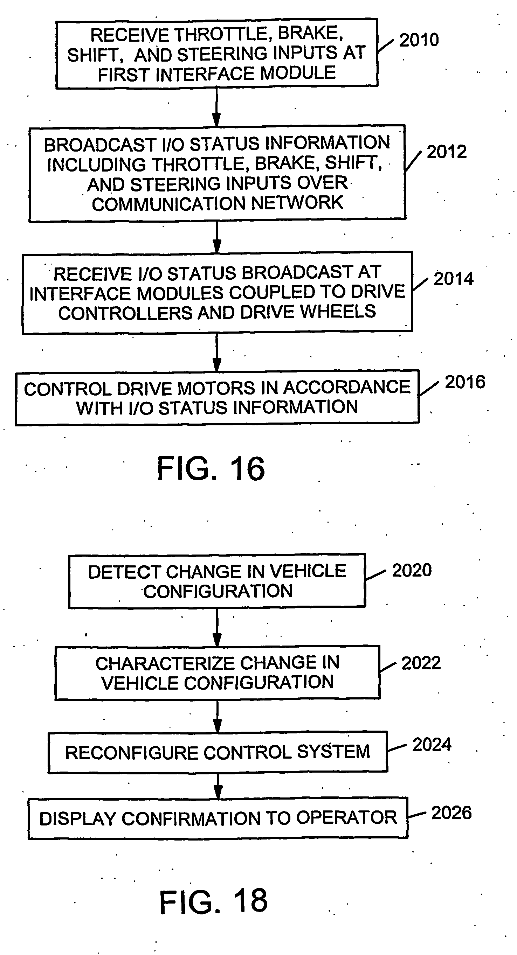

Each interface module 1934 receives the I/O status information from the operator interface 1973. For those interface modules that are connected to a respective drive controller 1930 and electric motor 1928, the I/O status information from the operator interface 1973 is processed to provide control signals to control the electric motor 1928. This process is shown in Fig. 16.

Referring now to Fig. 16, at step 2010, throttle, brake, shrift, and steering inputs are received from the operator at the interface module 1934 which is connected to the operator interface 1973. At step 2012, the throttle, brake, shift and steering inputs are transmitted by way of the communication network 1976 (during I/O status broadcasts as previously described). At step 2014, this information is received at each of the remaining interface modules 1934. At step 2016, the interface modules 1934 that control the Electric motors 1928 use the throttle, brake, shift and steering inputs to control the electric motors 1928. To this end, the interface modules 1934 determine a speed or torque command and provide this command to the drive controller 1930. Other information, such as vehicle weight, minimum desired wheel speed, wheel slip control parameters, and other information may also be used. Although the vehicle 1910 does not include a mechanical transmission, the shift input from the shift input device 1979 may be used to cause the electric motors 1928 to operate at different operating points depending on a status of the shift input device, with each of the operating points corresponding to different torque production capabilities (or different tradeoffs between vehicle responsiveness/acceleration capability and motor efficiency).

Each interface module 1934 preferably includes a number of control subprograms, including a subprogram 1983 for differential speed control, a subprogram 1985 for regenerative brake control, a subprogram 1987 for efficiency optimization control, and a configuration interface 1989 (Fig. 15). These programs provide for further control of the torque/speed command given by each interface module 1934 to the respective drive controller 1930.

The differential speed control program 1983 accepts the steering angle as an input and controls the motor speed of each motor 1928 such that the wheels 1914 rotate at slightly different speeds during vehicle turning maneuvers. The differential speed control program 1987 is an electronic implementation of a mechanical differential assembly. The steering angle input may also be used by another interface module 1934 to control a steering mechanism of the vehicle 1910 to thereby control a direction of travel of the vehicle 1910. Preferably, steering control takes into account other I/O status information (such as vehicle speed) and is optimized to avoid vehicle slippage ("scrubbing") during turn maneuvers. The differential speed control program 1987 monitors motor torque output along with other system parameters such that the speed difference between motors does not go above a predefined limit. This can be controlled both side by side and front to back and combinations of both. By commanding torque and monitoring and adjusting for speed difference, optimal tractive force can be put to ground in any traction condition.

Regenerative brake control program 1985 controls the motor 1928 such that the motor provides a braking action to brake the vehicle 1910 in response a regeneration/auxiliary signal is received. For example, a signal may be received from a brake pedal request (the brake pedal 1977 is pressed), no TPS count, or other user controller input/switch. This causes the motor 1928 to act as a generator to regenerate power back to the power storage unit 1922 or the principal power unit 1916 via the AC bus assembly 1942. In addition to regenerative braking, a standard anti-lock brake system is also used.

The efficiency optimization control program 1987 controls motor speed and torque conditions to allow a first subset of the motors 1928 to operate at an optimal power for a particular speed, and a second subset of the motors 1928 to operate in a regenerative mode. Having one set of motors operate 1928 at an optimal power for a particular speed and a second set of motors 1928 operate in a regenerative mode is more efficient and draws less net power than having all of the motors 1928 operating at a non-optimal speed. Alternative power matching schemes may also be used in which optimum efficiency for some of the motors 1928 is reached by having some of the remaining motors 1928 operate in a non-torque producing mode.

Configuration interface program 1989 allows for reconfiguration of the vehicle 1910 depending on which types of auxiliary nodules are mounted to the vehicle 1910. The configuration program 1989 detects what type of auxiliary modules are connected to the vehicle, and adjusts the configuration of the control program executed by the interface modules 1934 to take into account the particular configuration of the vehicle 1910 as determined by which auxiliary modules are present.

In particular, in the preferred embodiment, the principal power unit 1916, the power storage unit 1922, and the energy dissipation device 1932 are provided as auxiliary modules 1984 or 1986 (cf. Fig. 13) that are removably mounted on the vehicles platform and are removably connected to the communication network 1976 and the AC bus assembly 1942 by way of a suitable connector assembly. Other auxiliary modules 1986 may also be provided. An auxiliary module 1986 can be any type of equipment or tool required or associated with the function and operation of the vehicle 1910. For example, the auxiliary module 1986 can be a pump, a saw, a drill, a light, etc. The auxiliary module 1986 is removably connected to the communication network 1976 and the AC bus assembly 1942. A junction 1988 is used to facilitate the connection of the modules to the communication network 1976 and the AC power bus assembly 1942 and multiple junctions 1988 are located at convenient locations throughout the vehicle 1910. The junctions 1988 can accommodate various types of connections such as quick connectors, nuts and bolts, solder terminals, or clip terminals or the like. The junction 1988 can include a connector to accommodate connection to the communication network 1976 and/or the AC bus assembly 1942. Additional auxiliary modules can be added to the vehicle 1910 as circumstances and situations warrant.

As is shown in Fig. 17, auxiliary drive modules 1953 are used that each include a respective one of the drive wheels 1914, a respective one of the electric motors 1928, a respective one of the drive controllers 1930, and a respective one of the interface modules 1934. Like the other auxiliary modules discussed above, the auxiliary drive modules 1953 are capable of being removed, replaced, and added to the vehicle 1910. To this end, each auxiliary drive module 1953 incudes an electrical connector that mates with a compatible electrical connector one the vehicle platform 1912 and a mechanical mounting system (e. g. , a series of boots) that allows the auxiliary drive module 1953 to be quickly mounted to or removed from the vehicle 1910. The electrical connector connects the interface module 1934 to a communication network 1976 and connects the drive controller 1930 to the AC bus assembly 1942. Therefore, if one auxiliary drive module 1953 malfunctions, the auxiliary drive module 1953 can be removed and replaced with a properly functioning auxiliary drive module 1953. This allows the vehicle 1910 to return immediately to service while the inoperable drive module is serviced. This arrangement also allows the same vehicles to be provided with different drive capacities depending on intended usage. For example, under one usage profile, the vehicle 1910 may be provided with four auxiliary drive modules 1953. Under a second usage profile, the vehicle 1910 may be provided with two additional auxiliary drive modules 1953'for extra drive capacity. Additionally, the vehicle platform 1912 is preferably a generic vehicle platform that is used with several different types of vehicles having different application profiles requiring different drive capacities. In this regard, it may also be noted that the principal power unit 1916 is also capable of being removed and replaced with a principal power unit 1916 with a larger electric generation capacity. This feature is therefore advantageous in that auxiliary drive modules 1953 are capable of being added to and removed from the vehicle as a unit to achieve a corresponding increase or decrease in the drive capacity of the vehicle 1910, thereby giving the vehicle 1910 a reconfigurable drive capacity. As previously indicated, the system can be configured to have one of the interface modules 1934 control a single drive wheel 1914, an entire axle assembly (one or two motor configuration) as well as a tandem axle assembly (one and two motor axle configurations), as well as other permutations and combinations.

Referring to Fig. 18, Fig. 18 shows the operation of the configuration program 1989. At step 2020, it is detected that there has been a change in vehicle configuration. The auxiliary module may be any of the auxiliary modules described above. Step 2020 comprises detecting that an auxiliary module has been added in the case of an added auxiliary module, and comprises detecting that an auxiliary module has been removed in the case of a removed auxiliary module. If an auxiliary module has been rendered in operable (e. g. , one of the electric motors 1928 has tailed), then step 2020 comprises detecting that the inoperable auxiliary module has failed.

At step 2022, the configuration change is characterized. For example, if an auxiliary module has been added or removed, the type and location of the added/removed auxiliary module is determined. If one auxiliary module has been replaced with another auxiliary module, the location at which the change was made as well as the module type of the added and removed auxiliary modules is determined. In the case where the auxiliary module comprises an interface module 1934, the different characteristics of the different auxiliary modules may be stored in the respective interface modules 1934. As a result, step 2022 may be performed by querying the interface module 1934 of the removed auxiliary module (before it is removed) and by querying the interface module of the added auxiliary module.

At step 2024, the vehicle 1910 is reconfigured to accommodate the added auxiliary drive module. Step 2024 comprises updating control algorithms in the interface modules 1934. For example, if two auxiliary drive modules 1953' (Fig. 17) are added, the control algorithms may be updated to decrease the horsepower produced by the original motors 1928 in response to a particular throttle input to take into account the additional horsepower provided by the added electric motors 1928. Alternatively, if one of the electric motors 1928 fails or is otherwise rendered inoperable, then the updating compensates for less than all drive wheels being driven by causing the remaining electric motors to be controlled to provide additional horsepower. This gives the vehicle 1910 different modes of operation, for example, a first mode of operation in which the electric motors are controlled such that all of the plurality of drive wheels are driven, and a second mode of operation in which the electric motors are controlled such that less than all of the plurality of drive wheels are driven.

At step 2026, a confirmation is sent to the operator of the vehicle 1910 via a display of the operator interface 1973 to confirm that the vehicle has been reconfigured. It may also be desirable to transmit this information to other systems. For example, one of the interface modules 1934 may be provided with a wireless modem, and the change in configuration information may be transmitted wireless to an off-board computer using a radio frequency (RF) communication link. Indeed, any of the information stored in any of the interface modules or any of the other vehicle, computers (e. g. , engine control system, transmission control system, and so on) may be transmitted to an off-board computer system in this manner to allow off-board vehicle monitoring and/or off-board vehicle troubleshooting. The transfer of information may occur through a direct modem link with the off-board vehicle computer or through an Interne connection.

Thus, the vehicle 1910 has a modular construction, with the principal power unit 1916, the power storage unit 1922, the energy dissipation device 1932, the auxiliary drive modules 1953, other drive modules 1984 and 1986, and so on, being provided as modules that can be easily added to or removed from the vehicle. Any number of such modules can be added and is limited only by the extent to which suitable locations which connections to the communication network and AC bus assembly 1942 exist on the vehicle 1910. Once such a device is added, the control system is automatically, reconfigured by the interface modules 1934.

Figure 13 illustrates the wheels 1914 being driven directly by an electric motor 1928 through an appropriate wheel-end reduction assembly 1982 if necessary. Referring now to Figs. 19A-19B, a wheel-end reduction assembly 1982 can also couple the wheels 1914 to a differential assembly 1978 via drive shafts. A plurality of wheel-end reduction assemblies 1982 can couple the wheels 1914 to their respective electric motors 1928. Another embodiment of the vehicle 1910 includes a differential assembly 1978 coupled to the electric motor 1928 for driving at least two wheels. Additional differential assemblies 1978, such as three assemblies 1978, with each differential assembly coupled to an electric motor 1928 for driving at least two wheels, can also be configured in the vehicle 1910.

Thus, there is provided an electric traction vehicle of modular design with the modules interconnected by an AC bus assembly and a data bus network. Other embodiments using other types of vehicles are possible. For example, an electric traction vehicle using a modular component design can be utilized as a fire truck for use at an airport or one that can negotiate severe off-road terrain. The vehicle can also be used in a military configuration with the ability to negotiate extreme side slopes and negotiate extreme maneuvers at high speeds. The modular aspect of the vehicle architecture will allow for optimum placement of components to maximize performance with regard to center of gravity which will facilitate its operational capabilities.

### E. Other Exemplary Vehicles

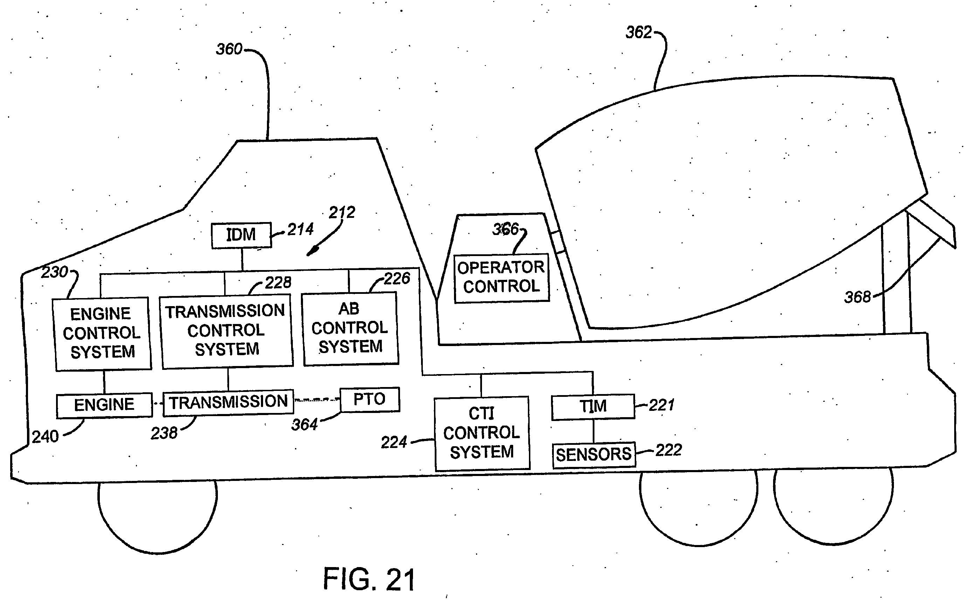

Referring now to Figs. 21-23, as previously mentioned, the control systems 12 and 1412 and the electric vehicle 1910 can be used in connection with a variety of different types of equipment service vehicles (e. g. , fire fighting vehicle, military vehicle, snow blower vehicle, refuse-handling vehicle, concrete mixing vehicle as well as others not described herein). Figs. 21-23 show some of the vehicles that can employ the control systems 12 and 1412 and the electric vehicle 1910.

Referring now to Fig. 21, a schematic view of another type of equipment service vehicle 360 is shown. The equipment service vehicle 360 is a mixing vehicle such as a cement mixing vehicle. The mixing vehicle, 360 comprises a rotatable mixing drum 362 that is driven by engine power from the engine 240 via a transmission 238 and a power takeoff mechanism 364. The mixing vehicle 360 also includes a dispenser or chute 368 that dispenses the mixed matter or material, for example, mixed cement. Then chute 368 is moveable to allow the mixed cement to be placed at different locations. The chute 368 may swing from one side of the concrete mixing vehicles 360 to the other side. Rotation of the mixing drum 362 is controller under operator control using an operator controls panel 366 including chute and drum controls comprising one or more joysticks or input devices. Additional controls may be provided inside the operator compartment for driver or passenger control of the drum 362 and chute 368, for example, a dash- mounted control lever to control drum rotation direction, a console-mounted joystick to control external hydraulic valves for chute up/down and swing right/left. Drum rotation start/stop may be controlled using a switch on top of the joystick lever. Outside controls mounted may include chute up/down and swing right/left and remote engine throttle. Drum rotation direction controls may be mounted on right side of front fender. The diagnostic system 212 is used to diagnose vehicle malfunctions in the manner described above in connection e.g. with the vehicle 10, as well as to diagnose malfunctions of the specialized systems described above found on mixing vehicle. In particular, the diagnostic system 212 includes an AB control system 226, a transmission control system 228, and an engine control system 230, all connected to a central control unit 214; furthermore, sensors 222 are connected to the control unit 214 via TIM modules 221, and a CTI control system 224 is provided.

The mixing vehicle 360 may also include the control system 1412 described above. In such an arrangement, for example, an interface module 1420 is located near the operator control panel 366 receiving operator inputs which the control system 1412 uses to control of the mixing drum 362. An additional interface module 1420 may also be provided in an operator compartment of the mixing vehicles 360 to interface with input devices inside the operator compartment which permit driver control of the mixing drum 362. interface modules 1420 are also connected to output devices such as a drive mechanism that controls rotation of the mixing drum 362 and a drive mechanism that controls movement of the chute 368. For example, if drum and chute movement are driven by engine power from the engine 240 via a power takeoff mechanism 364, the interface modules 1420 may be used to control output devices 1450 in the form of electronically controlled hydraulic valves that control the flow of hydraulic power from the engine to the mixing drum and electronically controlled hydraulic valves that control the flow of hydraulic power from the engine to the chute. Alternatively, if electric drive motors are used to drive drum and chute movement (for example, in the context of a mixing vehicle implemented using the electric vehicle 1910 as described above), then the interface modules 1420 may be used to control the drive motors. In operation, inputs are received from the operator controls at one interface module 1420 may be transmitted to the interface modules 1420 that control the valves during I/O status broadcasts, which in turn control operation of the drum 362 and chute 368 based on the operator inputs. Other devices, such as air dryers, air compressors, and a large capacity (e. g. , 150 gallon) (5681) water system may be connected to interface modules 1420 and controlled in accordance with operator inputs received from similar input devices at the operator panels and transmitted over the communication network. Additional interface modules 1420 may be used to receive inputs from input devices 1440 in the operator compartment and control output devices 1450 such as FMVSS lighting as described above.

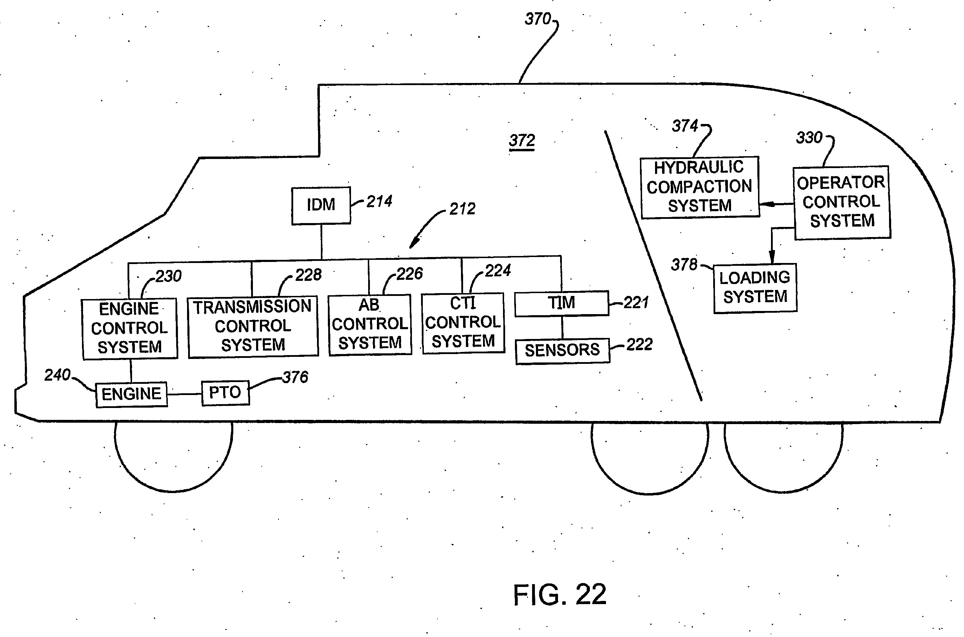

Referring now to Fig. 22, a schematic view of another type of equipment service vehicle 370 is shown. The equipment service vehicle 370 is a refuse handling vehicle and comprises one or more refuse compartments 372 for storing collected refuse and other materials such as goods for recycling. The refuse handling vehicle 370 also includes a hydraulic compactor 374 for compacting collected refuse. The hydraulic compactor 374 is driven by engine power from the engine 240 via a power takeoff mechanism 376. The refuse handling vehicle may also include an automatic loading or tipping system 378 for loading large refuse containers and for transferring the contents of the refuse containers into one of the compartments 372. The loading system 378 as well as the hydraulic compactor may controlled under operator control using a control panel 330. The diagnostic system 212 may be used to diagnose vehicle malfunctions in the manner described above in connection with the vehicles 10, or 360, respectively, as well as to diagnose malfunctions of the specialized systems described above, found on refuse handling vehicles.

The refuse handling vehicle 370 may also include the control system 1412 described above. In such an arrangement, an interface module 1420 is located near the hydraulic compactor 374 and controls valves associated with the hydraulic compactor 374. Another interface module 1420 located adjacent the automatic loading or tipping system 378 controls hydraulic valves associated with the system 378. Again, the interface modules 1420 may be used to control the drive motors instead of hydraulic valves in the context of. Another interface module 1420 is located adjacent the operator control panel 330 and is connected to receive operator inputs from input devices 1440 which are part of the control panel 330. In operation, inputs are received from the operator controls at one interface module 1420 and are transmitted to the interface modules 1420 that control the hydraulic valves during I/O status broadcasts, which in turn control operation of the hydraulic compactor 374 and loading system 378 based on the operator inputs. Additional interface modules may be used to receive inputs from input devices 1440 in the operator compartment and control output devices 1450 such as FMVSS lighting as described above.

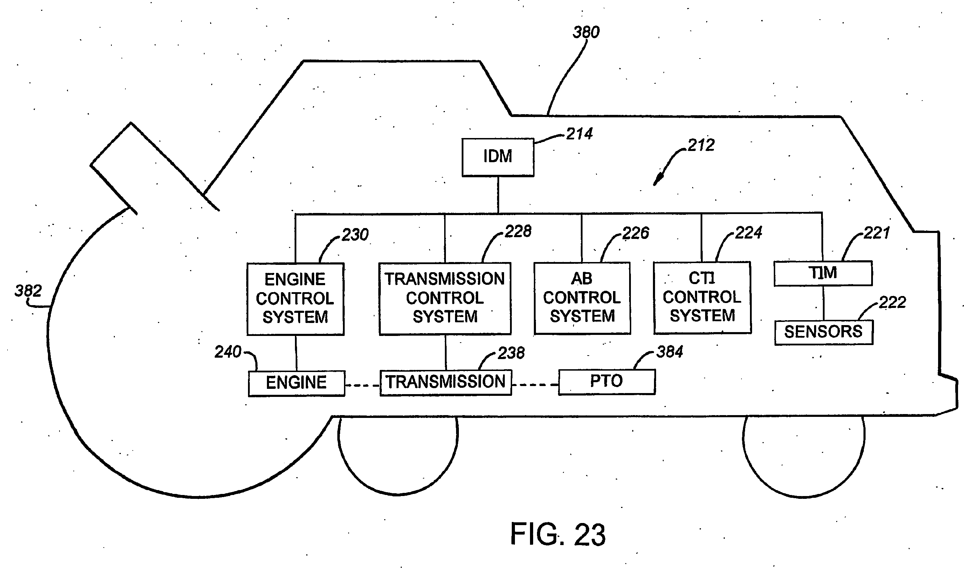

Referring now to Fig. 23, a schematic view of another type of equipment service vehicle 380 is shown. The equipment service vehicles 380 is a snow removal vehicle and comprises a snow removal device 382 which may, for example, be a rotary blower, plow, or sweeper. The snow removal device 382 may be driven by engine power from the engine 240 via a power takeoff mechanism 384 to remove snow from a region near the snow removal vehicle 380 as the snow removal vehicle, 380 is moving. The diagnostic system 212 may be used to diagnose vehicle malfunctions in the manner described above in connection with the vehicles 10, or 360, or 370, respectively, as well as to diagnose malfunctions of the specialized systems described above found on snow removal vehicles.

The snow removal vehicle 380 may also include the control system 1412 described above. An interface module 1420 located adjacent an operator compartment receives operator inputs from input devices 1440 located in the operator compartment. One or more additional interface modules 1420 receive the operator input during I/O status broadcasts, and in response controls various output devices 1450 such as FMVSS lighting as described above. Preferably, the snow removal vehicle 380 employs the teachings of U. S. Pat. No. 6,266, 598, entitled"Control System and Method for a Snow Removal Vehicle". The preferred snow removal vehicle disclosed therein comprises an impeller, an engine system, and an engine control system. The engine system includes a traction engine 240 which is coupled to drive wheels of the snow removal vehicle 380, and is adapted to drive the drive wheels to drive movement of the snow removal vehicle 380. The engine system also includes a PTO unit 384 and an impeller engine 382 which is coupled to the impeller and is adapted to drive the impeller to drive snow removal. The engine control system 230 receives feedback information pertaining to operation of the impeller, and controls the engine system based on the feedback information. The engine control system includes a communication network, a microprocessor-based traction engine control unit which is coupled to the traction engine and is adapted to control the traction engine, a microprocessor-based impeller engine controls unit which is coupled to the impeller engine and is adapted to control the impeller engine, and a microprocessor-based system control unit. The system control unit is coupled to the traction engine control unit and the impeller engine control unit by way of the network communication link. The system control unit is adapted to receive the feedback information pertaining to the operation of the impeller, and to generate a control signal for the traction engine control unit based on the feedback information.

Throughout the specification, numerous advantages of preferred embodiments have been identified. It will be understood of course that it is possible to employ the teachings herein so as to without necessarily achieving the same advantages. Additionally, although many features have been described in the context of a vehicle control system comprising multiple modules connected by a network, it will be appreciated that such features could also be implemented in the context of other hardware configurations. Further, although various figures depict a series of steps which are performed sequentially, the steps shown in such figures generally need not be performed in any particular order. For example, in practice, modular programming techniques are used and therefore some of the steps may be performed essentially simultaneously. Additionally, some steps shown may be performed repetitively with particular ones of the steps being performed more frequently than others. Alternatively, it may be desirable in some situations to perform steps in a different order than shown.

## Claims

1. An electric traction vehicle (1910) comprising:
a vehicle platform (1912); a plurality of drive wheels (1914) rotatably mounted on the vehicle platform; a plurality of electric motors (1928) coupled to respective ones of the plurality of drive wheels, the plurality of electric motors being used to drive the plurality of drive wheels; a power storage unit (1922) and a power source (1916) mounted on the vehicle platform, the power source being used to provide electric power to the plurality of electric motors (1928); control means comprising a plurality of drive controllers (1930) associated with respective ones of the plurality of the electric motors (1928); and a communication network (1976) ; **characterised in that** the vehicle (1910) comprises microprocessor-based interface modules (1934) which are coupled to each other by way of the communication network (1976), each one of the microprocessor-based interface modules (1934) being configured to store I/O information for input and output devices coupled to the microprocessor-based interface modules, wherein each one of the interface modules (1934) stores the complete I/O status information of all the interface modules, so that each interface module (1934) has total system awareness, a plurality of these microprocessor-based interface modules (1934) being coupled to the plurality of drive controllers (1930) in such way that each drive controller (1930) is functionally coupled to a microprocessor-based interface module (1934), whereby said functional coupling is such that the interface module (1934) controls the electric motor (1928) coupled to the respective drive controller (1930), said interface modules (1934) being configured to process input information received by way of the communication network (1976) and used to control the plurality of electric motors (1928), said input information being provided by at least one interface module (1973) to which input devices receiving commands from an operator are connected; **in that** the power source (1916) provides, by way of an AC bus assembly (1942) and the respective drive controllers (1930), three phase AC power to the plurality of electric motors (1928), as well as, by way of the AC bus assembly (1942), to an electrical connector (1951') which is configured to be used to allow an electrical power-consuming system off-board the vehicle (1910) which is not specifically designed for use with the vehicle (1910), to be connected to the vehicle and to draw AC power from the vehicle when the vehicle is stationary and a power consumption for the plurality of electric motors (1928) is substantially zero; **in that** respective interface modules (1934) are connected to the power source (1916) and to the power storage unit (1922) to control via the communication network (1976) the operation thereof, and **in that** the power source (1916) provides AC power having a frequency of either about 50 Hz or about 60 Hz and a voltage in a range of about 460-480 VAC to the electrical connector (1951').

2. The vehicle according to claim 1, **characterised in that** the plurality of drive wheels (1914) is a first plurality of drive wheels, wherein the vehicle comprises a second plurality of drive wheels, each of the second plurality of drive wheels being paired with respective ones of the first plurality of drive wheels such that each pair of drive wheels is driven in tandem by a respective one of the plurality of electric motors (1928).

3. The vehicle according to claim 1, **characterised in that** the plurality of electric motors (1928) includes at least four electric motors, and the plurality of microprocessor-based interface modules (1934) includes at least four microprocessor-based interface modules to control the electric motors.

4. The vehicle according to claim 1, **characterised in that** the plurality of electric motors (1928) includes at least eight electric motors, and the plurality of microprocessor-based interface modules (1934) includes at least four microprocessor-based interface modules to control the electric motors.

5. The vehicle according to claim 1, **characterised in that** the vehicle is a tactical military vehicle (1410).

6. The vehicle according to claim 1, **characterised in that** the vehicle (1910) is a firefighting vehicle, and the AC bus assembly provides power to scene lighting at the scene of a fire.

7. The vehicle according to claim 1, **characterised in that** the vehicle (1910) is a hybrid electric vehicle and the power source (1916) comprises a diesel engine (1918) coupled to an electric generator (1920)

8. The vehicle according to claim 1, **characterised in that** the power source (1916) comprises a fuel cell coupled to an inverter, the inverter being used to convert DC power from the fuel cell to AC power for the plurality of electric motors (1928) and the electrical connector.

9. The vehicle according to claim 1, **characterised in that** the plurality of microprocessor-based interface modules (1934) and a plurality of additional microprocessor-based interface modules cooperate to reconfigure the vehicle upon the addition and removal of a plurality of auxiliary modules (1953).

10. The vehicle according to claim 9, **characterised by** a plurality of auxiliary drive modules (1953, 1953'), and that the vehicle has a reconfigurable drive capacity, the reconfigurable drive capacity being achieved by way of the auxiliary drive modules, each of the plurality of auxiliary drive modules comprising an additional microprocessor-based interface module (1934), an additional electric motor (1928), and an additional drive wheel, the auxiliary drive modules being capable of being added to and removed from the vehicle as a unit to achieve a corresponding increase or decrease in the drive capacity of the vehicle.

11. The vehicle according to claim 10, **characterised in that** each of the auxiliary drive modules (1953) is removable and replaceable with a different auxiliary unit having different characteristics, the different characteristics being programmed into the interface module, and that the system is capable of reconfiguring itself automatically when a new auxiliary system is mounted on the vehicle.

12. The vehicle according to claim 1, **characterised in that** the plurality of microprocessor-based interface modules (1934) include a compensation program with two modes of operation;
wherein, in the first mode of operation, the plurality of interface modules control the electric motors (1928) such that all of the plurality of drive wheels (1914) are driven; and
wherein, in the second mode of operation, the plurality of interface modules control the electric motors (1928) such that less than all of the plurality of drive wheels (1914) are driven, the compensation program compensating for less than all drive wheels being driven by causing the remaining electric motors to be controlled to provide additional horsepower to compensate for the undriven drive wheel(s).

13. The vehicle according to claim 1, **characterised in that** each of the plurality of microprocessor-based interface modules (1934) is configured to control the respective electric motor (1928) to brake the vehicle.

14. The vehicle according to claim 1, **characterised in that** each of the plurality of microprocessor-based interface modules (1934) is configured to control the respective electric motor (1928) to regenerate power back to the power storage unit (1926) .

15. The vehicle of claim 1, **characterised in that** the power source (1916) is configured to provide power to the electrical energy storage device (1926), and that the electrical energy storage device is configured to be discharged using an energy dissipation device (1932) other than the plurality of electric motors (1928), the energy dissipation device being coupled to the AC bus assembly (1942).

16. The vehicle of claim 15, **characterised by** a user input device which is used to selectively discharge the energy storage device (1926) using the energy dissipation device (1932).

17. The vehicle of claim 15 or 16 when dependent on claim 7, **characterised in that** the diesel engine (1918) is coupled to an electric generator (1920) which is used to provide power to the electrical storage device (1926).

18. The vehicle of anyone of claims 15 to 17, **characterised in that** the energy dissipation device (1932) includes an engine fan.

19. The vehicle according to claim 1, **characterised in that** the power source (1916) provides at least 250 kilowatts of AC power.

20. The vehicle according to claim 1, **characterised in that** the power source (1916) provides at least 750 kilowatts of AC power.

21. The vehicle according to claim 1, **characterised in that** it comprises at least one additional microprocessor-based interface module connected to the communication network and a throttle input device coupled to one of said additional microprocessor-based interface modules, whereby the throttle input received by the throttle input device is transmitted to the plurality of microprocessor-based interface modules via the communication network by the additional microprocessor-based interface module coupled to the throttle input device, for controlling the speed of the electric motors in accordance with said throttle input.

22. The vehicle according to claims 13 and 21, **characterised by** a brake input device (1977) arranged to supply a brake input to one of the plurality of additional interface modules (1934); said additional interface module transmitting the brake input to the plurality of interface modules (1934) by way of the communication network (1976), to control the electric motors (1928) so as to operate in a regenerative braking mode in response to the brake input being active, the regenerative braking mode causing electric power to be drawn from the electric motors and provided to a power storage unit (1926) on board the vehicle.

23. The vehicle according to claim 21, **characterised by** a shift input device (1975) arranged to supply a transmission input to one of the plurality of additional interface modules (1934), said additional interface module transmitting the transmission input to the plurality of interface modules (1934) by way of the communication network (1976), to control the electric motors (1928) so as to operate at different operating points depending on a status of the shift input device.

24. The vehicle according to claim 21, **characterised by**
a steering input device (1981) arranged to supply a steering angle input to a first one of the plurality of additional interface modules (1934); said first additional interface module being arranged to
transmit the steering angle input to a second one of the plurality of additional interface modules by way of the communication network (1976);
a steering mechanism of the vehicle being controllable by using the second one of the plurality of additional interface modules, whereby the steering mechanism is controlled in accordance with the steering angle input to control a direction of travel of the vehicle, and the first mentioned plurality of interface modules control the electric motors (1928) in accordance with the steering angle input to operate at different speeds during turning maneuvers.

25. The vehicle according to claim 21, **characterised by** a detectable added auxiliary drive module (1953) which comprises an additional microprocessor-based interface module, an additional electric motor, and an additional drive wheel;
the vehicle being arranged for reconfiguration to accommodate the added auxiliary drive module, including updating control algorithms in the first interface module to decrease the horsepower produced by the electric motor in response to a particular throttle input.

26. The vehicle according to claim 1, **characterised in that** the AC bus assembly provides in excess of 250 kilowatts of power to off-board equipment.

27. The vehicle according to claim 26, **characterised in that** the AC bus assembly (1942) provides in excess of 750 kilowatts of power to off-board equipment.

## Patentansprüche

1. Elektrisches Triebfahrzeug (1910), enthaltend:
eine Fahrzeugplattform (1912); eine Mehrzahl von auf der Fahrzeugplattform drehbar angebrachten Antriebsrädern (1914); eine Mehrzahl von mit den jeweiligen der Mehrzahl von Antriebsrädern verbundenen Elektromotoren (1928), wobei die Mehrzahl von Elektromotoren zum Antreiben der Mehrzahl von Antriebsrädern verwendet wird; eine Stromspeichereinheit (1922) und eine Stromquelle (1916), die auf der Fahrzeugplattform angebracht sind, wobei die Stromquelle zum Zuführen von elektrischem Strom zur Mehrzahl von Elektromotoren (1928) verwendet wird; Steuermittel mit einer Mehrzahl von Antriebssteuerungen (1930), die den jeweiligen der Mehrzahl von Elektromotoren (1928) zugeordnet sind; und ein Kommunikationsnetz (1976); **dadurch gekennzeichnet, dass** das Fahrzeug (1910) mikroprozessorbasierte Schnittstellenmodule (1976), die über das Kommunikationsnetz (1934) miteinander verbunden sind, enthält, wobei jedes der Schnittstellenmodule (1934) auf Mikroprozessorbasis eingerichtet ist, um eingehende und ausgehende Informationen (I/O-Informationen) für mit den Schnittstellenmodulen auf Mikroprozessorbasis verbundenen Eingabe- und Ausgabevorrichtungen zu speichern, wobei jedes der Schnittstellenmodule (1934) die vollständigen I/O-Statusinformationen aller Schnittstellenmodule speichert, so dass jedes Schnittstellenmodul (1934) über Gesamtsystem-Kenntnis verfügt, wobei eine Mehrzahl dieser Schnittstellenmodule (1934) auf Mikroprozessorbasis mit der Mehrzahl von Antriebssteuerungen (1930) derart verbunden ist, dass jede Antriebssteuerung (1930) mit einem Schnittstellenmodul (1934) auf Mikroprozessorbasis funktionell verbunden ist, wobei die funktionelle Verbindung derart ist, dass das Schnittstellenmodul (1934) den mit der jeweiligen Antriebssteuerung (1930) verbundenen Elektromotor (1928) steuert, wobei die Schnittstellenmodule (1934) eingerichtet sind, um über das Kommunikationsnetz (1976) empfangene und zur Steuerung der Mehrzahl von Elektromotoren (1928) verwendete Eingangsinformationen zu verarbeiten, wobei die Eingangsinformationen durch zumindest ein Schnittstellenmodul (1973) vorgesehen werden, mit dem Eingabevorrichtungen, die Befehle von einem Benutzer erhalten, verbunden sind; dass die Stromquelle (1916) die Mehrzahl von Elektromotoren (1928) über eine Wechselstrom-Busanordnung (1942) und die jeweiligen Antriebssteuerungen (1930) sowie über die Wechselstrom-Busanordnung (1942) einen elektrischen Anschluss (1951') mit Dreiphasenwechselstrom versorgt, wobei der elektrische Anschluss eingerichtet ist, um zu ermöglichen, dass ein sich nicht auf dem Fahrzeug (1910) befindliches, elektrischen Strom verbrauchendes System, das nicht spezifisch zur Verwendung mit dem Fahrzeug (1910) ausgestaltet ist, am Fahrzeug angeschlossen werden und Wechselstrom aus dem Fahrzeug ziehen kann, wenn das Fahrzeug stationär ist und ein Stromverbrauch der Mehrzahl von Elektromotoren (1928) im Wesentlichen Null ist; dass die jeweiligen Schnittstellenmodule (1934) mit der Stromquelle (1916) und der Stromspeichereinheit (1922) zur Steuerung von deren Betrieb über das Kommunikationsnetz (1976) verbunden sind, und dass die Stromquelle (1916) dem elektrischen Anschluss (1951') Wechselstrom mit einer Frequenz von entweder ungefähr 50 Hz oder ungefähr 60 Hz und eine Spannung in einem Bereich von ungefähr 460 bis 480 VAC zuführt.

2. Fahrzeug nach Anspruch 1, **dadurch gekennzeichnet, dass** die Mehrzahl von Antriebsrädern (1914) eine erste Mehrzahl von Antriebsrädern ist, wobei das Fahrzeug eine zweite Mehrzahl von Antriebsrädern enthält, wobei jedes der zweiten Mehrzahl von Antriebsrädern mit den jeweiligen der ersten Mehrzahl von Antriebsrändern derart gepaart ist, dass jedes Paar Antriebsräder durch einen jeweiligen der Mehrzahl von Elektromotoren (1928) gemeinsam angetrieben wird.

3. Fahrzeug nach Anspruch 1, **dadurch gekennzeichnet, dass** die Mehrzahl von Elektromotoren (1928) zumindest vier Elektromotoren enthält, und die Mehrzahl von Schnittstellenmodulen (1934) auf Mikroprozessorbasis zumindest vier Schnittstellenmodule auf Mikroprozessorbasis zur Steuerung der Elektromotoren enthält.

4. Fahrzeug nach Anspruch 1, **dadurch gekennzeichnet, dass** die Mehrzahl von Elektromotoren (1928) zumindest acht Elektromotoren enthält, und die Mehrzahl von Schnittstellenmodulen (1934) auf Mikroprozessorbasis zumindest vier Schnittstellenmodule auf Mikroprozessorbasis zur Steuerung der Elektromotoren enthält.

5. Fahrzeug nach Anspruch 1, **dadurch gekennzeichnet, dass** das Fahrzeug ein taktisches Militärfahrzeug (1410) ist.

6. Fahrzeug nach Anspruch 1, **dadurch gekennzeichnet, dass** das Fahrzeug (1910) ein Löschfahrzeug ist, und die Wechselstrom-Busanordnung Beleuchtungsmittel am Ort eines Feuers mit Strom versorgt.

7. Fahrzeug nach Anspruch 1, **dadurch gekennzeichnet, dass** das Fahrzeug (1910) ein Elektrisches Triebfahrzeug mit Hybridantrieb ist, und die Stromquelle (1916) einen mit einem elektrischen Generator (1920) verbundenen Dieselmotor (1918) enthält.

8. Fahrzeug nach Anspruch 1, **dadurch gekennzeichnet, dass** die Stromquelle (1916) eine mit einem Wechselrichter verbundene Brennstoffzelle enthält, wobei der Wechselrichter zum Umwandeln von Gleichstrom aus der Brennstoffzelle in Wechselstrom für die Mehrzahl von Elektromotoren (1928) und den elektrischen Anschluss verwendet wird.

9. Fahrzeug nach Anspruch 1, **dadurch gekennzeichnet, dass** die Mehrzahl von Schnittstellenmodulen (1934) auf Mikroprozessorbasis und eine Mehrzahl von zusätzlichen Schnittstellenmodulen auf Mikroprozessorbasis zusammenarbeiten, um das Fahrzeug nach Hinzufügung und Entfernung einer Mehrzahl von Zusatzmodulen (1953) zu rekonfigurieren.

10. Fahrzeug nach Anspruch 9, **gekennzeichnet durch** eine Mehrzahl von Zusatzantriebsmodulen (1953, 1953') und **dadurch**, dass das Fahrzeug eine rekonfigurierbare Antriebsleistung aufweist, wobei die rekonfigurierbare Antriebsleistung über die Zusatzantriebsmodule erzielt wird, wobei jedes der Mehrzahl von Zusatzantriebsmodulen ein zusätzliches Schnittstellenmodul (1934) auf Mikroprozessorbasis, einen zusätzlichen Elektromotor (1928) und ein zusätzliches Antriebsrad enthält, wobei die Zusatzantriebsmodule in der Lage sind, dem Fahrzeug als Einheit hinzugefügt und von diesem als Einheit entfernt zu werden, um eine entsprechende Erhöhung bzw. Verringerung der Antriebsleistung des Fahrzeugs zu erzielen.

11. Fahrzeug nach Anspruch 10, **dadurch gekennzeichnet, dass** jedes der Zusatzantriebsmodule (1953) entfernbar und durch eine unterschiedliche Zusatzeinheit mit unterschiedlichen Eigenschaften ersetzbar ist, wobei die unterschiedlichen Eigenschaften in das Schnittstellenmodul programmiert sind, und dass das System in der Lage ist, sich selbst automatisch zu rekonfigurieren, wenn ein neues Zusatzsystem am Fahrzeug angebracht wird.

12. Fahrzeug nach Anspruch 1, **dadurch gekennzeichnet, dass** die Mehrzahl von Schnittstellenmodulen (1934) auf Mikroprozessorbasis ein Kompensationsprogramm mit zwei Betriebsmodi enthält;
wobei die Mehrzahl von Schnittstellenmodulen im ersten Betriebsmodus die Elektromotoren (1928) derart steuert, dass jedes der Mehrzahl von Antriebsrädern (1914) angetrieben wird; und
wobei die Mehrzahl von Schnittstellenmodulen im zweiten Betriebsmodus die Elektromotoren (1928) derart steuern, dass weniger als alle der Mehrzahl von Antriebsrädern (1914) angetrieben werden, wobei das Kompensationsprogramm eine Kompensation liefert, wenn nicht jedes Antriebsrad angetrieben wird, indem es eine Steuerung der restlichen Elektromotoren dahingehend bewirkt, dass zusätzliche Leistung zum Kompensieren des nicht angetriebenen Antriebsrads bzw. der nicht angetriebenen Antriebsräder vorgesehen werden.

13. Fahrzeug nach Anspruch 1, **dadurch gekennzeichnet, dass** jedes der Mehrzahl von Schnittstellenmodulen (1934) auf Mikroprozessorbasis eingerichtet ist, um den jeweiligen Elektromotor (1928) zum Bremsen des Fahrzeugs zu steuern.

14. Fahrzeug nach Anspruch 1, **dadurch gekennzeichnet, dass** jedes der Mehrzahl von Schnittstellenmodulen (1934) auf Mikroprozessorbasis eingerichtet ist, um den jeweiligen Elektromotor (1928) zum Rückspeisen von Strom zurück zur Stromspeichereinheit (1926) zu steuern.

15. Fahrzeug nach Anspruch 1, **dadurch gekennzeichnet, dass** die Stromquelle (1916) eingerichtet ist, um die elektrische Energiespeichervorrichtung (1926) mit Strom zu versorgen, und dass die elektrische Energiespeichervorrichtung eingerichtet ist, um mittels einer energieverbrauchenden Vorrichtung (1932), bei der es sich nicht um die Mehrzahl von Elektromotoren (1928) handelt, entladen zu werden, wobei die energieverbrauchende Vorrichtung mit der Wechselstrom-Busanordnung (1942) verbunden ist.

16. Fahrzeug nach Anspruch 15, **gekennzeichnet durch** eine Benutzer-Eingabevorrichtung, die zur selektiven Entladung der Energiespeichervorrichtung (1926) mittels der energieverbrauchenden Vorrichtung (1932) verwendet wird.

17. Fahrzeug nach Anspruch 15 oder 16, wenn von Anspruch 7 abhängig, **dadurch gekennzeichnet, dass** der Dieselmotor (1918) mit einem elektrischen Generator (1920) verbunden ist, der verwendet wird, um die elektrische Speichervorrichtung (1926) mit Strom zu versorgen.

18. Fahrzeug nach einem der Ansprüche 15 bis 17, **dadurch gekennzeichnet, dass** die energieverbrauchende Vorrichtung (1932) einen Motor-Lüfter enthält.

19. Fahrzeug nach Anspruch 1, **dadurch gekennzeichnet, dass** die Stromquelle (1916) zumindest 250 kW Wechselstrom liefert.

20. Fahrzeug nach Anspruch 1, **dadurch gekennzeichnet, dass** die Stromquelle (1916) zumindest 750 kW Wechselstrom liefert.

21. Fahrzeug nach Anspruch 1, **dadurch gekennzeichnet, dass** es zumindest ein zusätzliches, mit dem Kommunikationsnetz verbundenes Schnittstellenmodul auf Mikroprozessorbasis und eine mit einem der zusätzlichen Schnittstellenmodule auf Mikroprozessorbasis verbundene Fahrpedal-Eingabeeinrichtung enthält, wobei die von der Fahrpedal-Eingabeeinrichtung empfangene Fahrpedal-Eingabe mittels des zusätzlichen, mit der Fahrpedal-Eingabeeinrichtung verbundenen Schnittstellenmoduls auf Mikroprozessorbasis über das Kommunikationsnetz zur Mehrzahl von Schnittstellenmodulen auf Mikroprozessorbasis übertragen wird, um die Geschwindigkeit der Elektromotoren entsprechend der Fahrpedal-Eingabe zu steuern.

22. Fahrzeug nach den Ansprüchen 13 und 21, **gekennzeichnet durch** eine Brems-Eingabeeinrichtung (1977), die zum Zuführen einer Brems-Eingabe zu einem der Mehrzahl von zusätzlichen Schnittstellenmodulen (1934) angeordnet ist; wobei das zusätzliche Schnittstellenmodul die Brems-Eingabe über das Kommunikationsnetz (1976) an die Mehrzahl von Schnittstellenmodulen (1934) zur Steuerung der Elektromotoren (1928) überträgt, so dass diese in Reaktion auf die aktive Bremseingabe in einem regenerierenden Bremsmodus arbeiten, wobei der regenerierende Bremsmodus bewirkt, dass elektrischer Strom aus den Elektromotoren gezogen und einer sich am Fahrzeug befindlichen Stromspeichereinheit (1926) zugeführt wird.

23. Fahrzeug nach Anspruch 21, **gekennzeichnet durch** eine Schalt-Eingabevorrichtung (1975), die angeordnet ist, um eine Getriebe-Eingabe einem der Mehrzahl von zusätzlichen Schnittstellenmodulen (1934) zuzuführen, wobei das zusätzliche Schnittstellenmodul die Getriebe-Eingabe über das Kommunikationsnetz (1976) an die Mehrzahl von Schnittstellenmodulen (1934) überträgt, um die Elektromotoren (1928) zu steuern, so dass diese je nach Status der Schalt-Eingabevorrichtung an unterschiedlichen Betriebspunkten arbeiten.

24. Fahrzeug nach Anspruch 21, **gekennzeichnet durch**
eine Lenk-Eingabevorrichtung (1981), die angeordnet ist, um eine Lenkwinkel-Eingabe einem ersten der Mehrzahl von zusätzlichen Schnittstellenmodulen (1934) zuzuführen; wobei das erste zusätzliche Schnittstellenmodul angeordnet ist, um
die Lenkwinkel-Eingabe über das Kommunikationsnetz (1976) an ein zweites der Mehrzahl von zusätzlichen Schnittstellenmodulen zu übertragen;
wobei ein Lenkmechanismus des Fahrzeugs mittels des zweiten der Mehrzahl von zusätzlichen Schnittstellenmodulen steuerbar ist, wobei der Lenkmechanismus entsprechend der Lenkwinkel-Eingabe gesteuert wird, um eine Fahrtrichtung des Fahrzeugs zu steuern, und wobei die erstgenannte Mehrzahl von Schnittstellenmodulen die Elektromotoren (1928) entsprechend der Lenkwinkel-Eingabe steuert, so dass diese während des Fahrens von Kurven mit unterschiedlichen Geschwindigkeiten arbeiten.

25. Fahrzeug nach Anspruch 21, **gekennzeichnet durch** ein detektierbares, hinzugefügtes Zusatzantriebsmodul (1953), das ein zusätzliches Schnittstellenmodul auf Mikroprozessorbasis, einen zusätzlichen Elektromotor und ein zusätzliches Antriebsrad enthält;
wobei das Fahrzeug zur Rekonfiguration eingerichtet ist, um das hinzugefügte Zusatzantriebsmodul aufzunehmen, einschließlich des Aktualisierens von Steueralgorithmen im ersten Schnittstellenmodul, um die vom Elektromotor in Antwort auf eine spezielle Fahrpedal-Eingabe erzeugte Leistung zu verringern.

26. Fahrzeug nach Anspruch 1, **dadurch gekennzeichnet, dass** die Wechselstrom-Busanordnung mehr als 250 kW Strom für eine nicht am Fahrzeug befindliche Ausstattung liefert.

27. Fahrzeug nach Anspruch 26, **dadurch gekennzeichnet, dass** die Wechselstrom-Busanordnung (1942) mehr als 750 kW Strom für eine nicht am Fahrzeug befindliche Ausstattung liefert.

## Revendications

1. Véhicule à traction électrique (1910) comprenant :
une plate-forme de véhicule (1912) ; une pluralité de roues d'entraînement (1914) montées à rotation sur la plate-forme du véhicule ; une pluralité de moteurs électriques (1928) couplés à certaines roues respectives de la pluralité de roues d'entraînement, la pluralité des moteurs électriques étant utilisée pour entraîner la pluralité de roues d'entraînement ; une unité de stockage d'énergie (1922) et une source d'énergie (1916) montées sur la plate-forme du véhicule, la source d'énergie étant utilisée pour fournir de l'énergie électrique à la pluralité de moteurs électriques (1928) ; des moyens de commande comprenant une pluralité de dispositifs de commande d'entraînement (1930) associés à certains moteurs respectifs de la pluralité de moteurs électriques (1928) ; et un réseau de communication (1976),
**caractérisé en ce que** le véhicule (1910) comprend des modules d'interface (1934) à base de microprocesseurs, qui sont couplés l'un à l'autre au moyen du réseau de communication (1976), chacun des modules d'interface (1934) à base de microprocesseurs étant configuré pour stocker des informations E/S pour des dispositifs d'entrée et de sortie couplés aux modules d'interface à base de microprocesseurs, dans lequel chacun des modules d'interface (1934) stocke les informations complètes de statut E/S de tous les modules d'interface de sorte que chaque module d'interface (1934) ait une conscience totale du système, une pluralité de ces modules d'interface (1934) à base de microprocesseurs étant couplée à la pluralité de dispositifs de commande d'entraînement (1930) de manière que chaque dispositif de commande d'entraînement (1930) soit fonctionnellement couplé à un module d'interface (1934) à base de microprocesseur, ledit couplage fonctionnel étant tel que le module d'interface (1934) commande le moteur électrique (1928) couplé au dispositif de commande d'entraînement respectif (1930), lesdits modules d'interface (1934) étant configurés pour traiter des informations d'entrée reçues au moyen du réseau de communication (1976) et utilisés pour commander la pluralité de moteurs électriques (1928), lesdites informations d'entrée étant fournies par au moins un module d'interface (1973), auquel des dispositifs d'entrée recevant des instructions d'un opérateur sont connectés ; **en ce que** la source d'énergie (1916) fournit, par le biais d'un ensemble de bus CA (1942) et des dispositifs de commande d'entraînement respectifs (1930), de l'énergie CA triphasée à la pluralité de moteurs électriques (1928) ainsi que, au moyen de l'ensemble de bus CA (1942), à un connecteur électrique (1951)' qui est configuré pour être utilisé afin de permettre à un système de consommation d'énergie électrique monté hors du véhicule (1910), qui n'est pas spécifiquement conçu pour un usage avec le véhicule (1910), d'être connecté au véhicule et de soutirer de l'énergie CA du véhicule lorsque celui-ci est stationnaire et que la consommation d'énergie pour la pluralité de moteurs électriques (1928) est sensiblement nulle ; **en ce que** les modules d'interface respectifs (1934) sont connectés à la source d'énergie (1916) et à l'unité de stockage d'énergie (1922) pour commander, via le réseau de communication (1976), leur fonctionnement, et **en ce que** la source d'énergie (1916) fournit de l'énergie CA ayant une fréquence d'environ 50 Hz ou 60 Hz et une tension dans la plage d'environ 460 à 480 VCA au connecteur électrique (1951').

2. Véhicule selon la revendication 1, **caractérisé en ce que** la pluralité de roues d'entraînement (1914) est une première pluralité de roues d'entraînement, dans lequel le véhicule comprend une seconde pluralité de roues d'entraînement, chacune de la seconde pluralité de roues d'entraînement étant jumelée à des roues respectives de la première pluralité de roues d'entraînement de sorte que chaque paire de roues d'entraînement soit entraînée en tandem par un moteur respectif de la pluralité de moteurs électriques (1928).

3. Véhicule selon la revendication 1, **caractérisé en ce que** la pluralité de moteurs électriques (1928) comprend au moins quatre moteurs électriques et la pluralité de modules d'interface (1934) à base de microprocesseurs comprend au moins quatre modules d'interface à base de microprocesseurs pour commander les moteurs électriques.

4. Véhicule selon la revendication 1, **caractérisé en ce que** la pluralité de moteurs électriques (1928) comprend au moins huit moteurs électriques et la pluralité de modules d'interface (1934) à base de microprocesseurs comprend au moins quatre modules d'interface à base de microprocesseurs pour commander les moteurs électriques.

5. Véhicule selon la revendication 1, **caractérisé en ce que** le véhicule est un véhicule militaire tactique (1410).

6. Véhicule selon la revendication 1, **caractérisé en ce que** le véhicule (1910) est un véhicule de lutte contre l'incendie et l'ensemble de bus CA fournit de l'énergie à l'éclairage de la scène sur l'emplacement d'un feu.

7. Véhicule selon la revendication 1, **caractérisé en ce que** le véhicule (1910) est un véhicule électrique hybride et la source d'énergie (1916) comprend un moteur diesel (1918) couplé à un générateur électrique (1920).

8. Véhicule selon la revendication 1, **caractérisé en ce que** la source d'énergie (1916) comprend une pile à combustible couplée à un inverseur, l'inverseur étant utilisé pour convertir de l'énergie CC de la pile à combustible en énergie CA pour la pluralité de moteurs électriques (1928) et pour le connecteur électrique.

9. Véhicule selon la revendication 1, **caractérisé en ce que** la pluralité de modules d'interface (1934) à base de microprocesseurs et une pluralité de modules d'interface à base de microprocesseurs supplémentaires coopèrent pour reconfigurer le véhicule lors de l'addition et du retrait d'une pluralité de modules auxiliaires (1953).

10. Véhicule selon la revendication 9, **caractérisé par** une pluralité de modules d'entraînement auxiliaires (1953, 1953') et **caractérisé en ce que** le véhicule a une capacité d'entraînement reconfigurable, la capacité d'entraînement reconfigurable étant obtenue au moyen des modules d'entraînement auxiliaires, chacun de la pluralité de modules d'entraînement auxiliaires comprenant un module d'interface (1934) à base de microprocesseur supplémentaire, un moteur électrique supplémentaire (1928) et une roue d'entraînement supplémentaire, les modules d'entraînement auxiliaires étant à même d'être ajoutés et retirés du véhicule sous la forme d'une unité pour obtenir une augmentation ou une réduction correspondante de la capacité d'entraînement du véhicule.

11. Véhicule selon la revendication 10, **caractérisé en ce que** chacun des modules d'entraînement auxiliaires (1953) peut être retiré et remplacé par une unité auxiliaire différente ayant différentes caractéristiques, les différentes caractéristiques étant programmées dans le module d'interface, et **en ce que** le système est capable de se reconfigurer automatiquement lorsqu'un nouveau système auxiliaire est monté sur le véhicule.

12. Véhicule selon la revendication 1, **caractérisé en ce que** la pluralité de modules d'interface (1934) à base de microprocesseurs comprend un programme de compensation avec deux modes de fonctionnement ;
dans lequel, dans le premier mode de fonctionnement, la pluralité de modules d'interface commande les moteurs électriques (1928) de sorte que la totalité de la pluralité de roues d'entraînement (1914) soit entraînée ; et
dans lequel, dans le second mode de fonctionnement, la pluralité de modules d'interface commande les moteurs électriques (1928) de sorte qu'il y ait moins de la totalité de la pluralité des roues d'entraînement (1914) qui soit entraînée, le programme de compensation compensant la moindre quantité de toutes les roues d'entraînement qui sont entraînées en amenant les moteurs électriques restants à être commandés pour fournir une puissance en chevaux supplémentaire afin de compenser la ou les roues d'entraînement qui ne sont pas entraînées.

13. Véhicule selon la revendication 1, **caractérisé en ce que** chacun de la pluralité de modules d'interface (1934) à base de microprocesseurs est configuré pour commander le moteur électrique respectif (1928) afin de freiner le véhicule.

14. Véhicule selon la revendication 1, **caractérisé en ce que** chacun de la pluralité de modules d'interface (1934) à base de microprocesseurs est configuré pour commander le moteur électrique respectif (1928) afin de régénérer de l'énergie dans l'unité de stockage d'énergie (1926).

15. Véhicule selon la revendication 1, **caractérisé en ce que** la source d'énergie (1916) est configurée pour fournir de l'énergie au dispositif de stockage d'énergie électrique (1926) et **en ce que** le dispositif de stockage d'énergie électrique est configuré pour être déchargé en utilisant un dispositif de dissipation d'énergie (1932) autre que la pluralité de moteurs électriques (1928), le dispositif de dissipation d'énergie étant couplé à l'ensemble de bus CA (1942).

16. Véhicule selon la revendication 15, **caractérisé par** un dispositif d'entrée utilisateur qui est utilisé pour décharger sélectivement le dispositif de stockage d'énergie (1926) en utilisant le dispositif de dissipation d'énergie (1932).

17. Véhicule selon la revendication 15 ou 16, lorsqu'elle dépend de la revendication 7, **caractérisé en ce que** le moteur diesel (1918) est couplé à un générateur électrique (1920) qui est utilisé pour fournir de l'énergie au dispositif de stockage d'énergie électrique (1926).

18. Véhicule selon l'une quelconque des revendications 15 à 17, **caractérisé en ce que** le dispositif de dissipation d'énergie (1932) comprend un ventilateur de moteur.

19. Véhicule selon la revendication 1, **caractérisé en ce que** la source d'énergie (1916) fournit au moins 250 kilowatts d'énergie CA.

20. Véhicule selon la revendication 1, **caractérisé en ce que** la source d'énergie (1916) fournit au moins une énergie CA de 750 kilowatts.

21. Véhicule selon la revendication 1, **caractérisé en ce qu'**il comprend au moins un module d'interface à base de microprocesseur supplémentaire connecté au réseau de communication et un dispositif d'entrée d'étranglement couplé à l'un desdits modules d'interface à base de microprocesseurs supplémentaires, l'entrée d'étranglement reçue par le dispositif d'entrée d'étranglement étant transmise à la pluralité de modules d'interface à base de microprocesseurs via le réseau de communication par le module d'interface à base de microprocesseur supplémentaire couplé au dispositif d'entrée d'étranglement afin de commander la vitesse des moteurs électriques selon ladite entrée d'étranglement.

22. Véhicule selon les revendications 13 et 21, **caractérisé par** un dispositif d'entrée de frein (1977) aménagé pour fournir une entrée de frein à l'un de la pluralité de modules d'interface supplémentaires (1934) ; ledit module d'interface supplémentaire transmettant l'entrée de frein à la pluralité de modules d'interface (1934) au moyen du réseau de communication (1976) pour commander les moteurs électriques (1928) de manière à opérer en mode de freinage régénérateur en réponse à l'entrée de frein active, le mode de freinage régénérateur amenant le soutirage d'énergie électrique des moteurs électriques pour la fournir à une unité de stockage d'énergie (1926) à bord du véhicule.

23. Véhicule selon la revendication 21, **caractérisé par** un dispositif d'entrée à décalage (1975) aménagé pour fournir une entrée de transmission à l'un de la pluralité de modules d'interface supplémentaires (1934), ledit module d'interface supplémentaire transmettant l'entrée de transmission à la pluralité de modules d'interface (1934) au moyen du réseau de communication (1976), pour commander les moteurs électriques (1928) de manière à opérer en différents points de fonctionnement en fonction d'un statut du dispositif d'entrée à décalage.

24. Véhicule selon la revendication 21, **caractérisé par** :
un dispositif d'entrée de direction (1981) aménagé pour fournir une entrée d'angle de direction à un premier de la pluralité de modules d'interface supplémentaires (1934) ; ledit premier module d'interface supplémentaire étant aménagé
pour transmettre l'entrée d'angle de direction à un deuxième de la pluralité des modules d'interface supplémentaires au moyen du réseau de communication (1976) ;
un mécanisme de direction du véhicule pouvant être commandé en utilisant le deuxième de la pluralité de modules d'interface supplémentaires, si bien que le mécanisme de direction est commandé selon l'entrée d'angle de direction pour commander un sens de déplacement du véhicule et la première pluralité mentionnée de modules d'interface commande les moteurs électriques (1928) en fonction de l'entrée d'angle de direction pour opérer à différentes vitesses au cours de manoeuvres de virage.

25. Véhicule selon la revendication 21, **caractérisé par** un module d'entraînement auxiliaire ajouté détectable (1953) qui comprend un module d'interface à base de microprocesseur supplémentaire, un moteur électrique supplémentaire et une roue d'entraînement supplémentaire ; le véhicule étant aménagé pour une reconfiguration afin de s'accommoder au module d'entraînement auxiliaire ajouté, comprenant une mise à jour d'algorithmes de commande dans le premier module d'interface pour réduire la puissance en chevaux produite par le moteur électrique en réponse à une entrée d'étranglement particulière.

26. Véhicule selon la revendication 1, **caractérisé en ce que** l'ensemble de bus CA fournit plus de 250 kilowatts d'énergie à un équipement monté hors bord.

27. Véhicule selon la revendication 26, **caractérisé en ce que** l'ensemble de bus CA (1942) fournit plus de 750 kilowatts d'énergie à un équipement monté hors bord.
